# EUROPEAN PATENT APPLICATION

(11) **EP 4 687 059 A1**
(43) Date of publication of application: **04.02.2026**
(21) Application number: 25178700.8
(22) Date of filing: 26.05.2025
(51) Int. Cl.: G06F 30/12, G06F 30/13, G06F 30/18, G06F 30/20

(54) **DESIGN SUPPORT DEVICE AND DESIGN SUPPORT SYSTEM**

(30) Priority: 31.07.2024 JP 2024124886
(71) Applicant: Hitachi GE Vernova Nuclear Energy, Ltd., Hitachi-shi, Ibaraki 317-0073 (JP)
(72) Inventor: HOSOKAWA, Yuji, Ibaraki 317-0073 (JP); OSAKA, Masaaki, Ibaraki 317-0073 (JP); ISHIDA, Kazuya, Ibaraki 317-0073 (JP)
(74) Representative: MERH-IP Matias Erny Reichl Hoffmann Patentanwälte PartG mbB

(57) **Abstract**

A design support device includes: a virtual space creation unit configured to create image data of a three-dimensional virtual space simulating a site to be designed; and an object control unit having a function of creating an object simulating equipment to be designed in the virtual space, in a case where information on a creation operation of a predetermined object performed by a predetermined user included in the plurality of users in the virtual space is input via the communication unit, configured to create image data of the predetermined object and create attribute information of the predetermined object that can be referred to by other users to output the image data and the attribute information of the predetermined object to the plurality of external devices used by each of a plurality of users.

## Description

### BACKGROUND

### Technical Field

The present invention relates to a design support device and a design support system.

### Related Art

Conventionally, various techniques related to design work of a power plant have been proposed (see, for example, Patent Literature 1.). Patent Literature 1 discloses a device for creating three-dimensional arrangement adjustment CAD data for easily and quickly creating three-dimensional arrangement adjustment computer aided design (CAD) data of an arrangement route of a cable storage component at the time of initial planning of plant design.

### Citation List

### Patent Literature

Patent Literature 1: JP 2010-211652 A

### SUMMARY

Meanwhile, in conventional plant design work, for example, design and planning work such as system design, equipment design, construction design, and site construction planning is often advanced in a waterfall type. This method has an advantage that the role of each design department is clarified, but has a disadvantage that vertical division of the design department is promoted, which may hinder cooperation between the design departments. Therefore, in this method, information cannot be fed back from downstream design such as a site construction plan to upstream design such as a system design and a construction design, and there is a possibility that a reasonable design cannot be obtained between the downstream side and the upstream side.

Specifically, since the system design is started prior to other design work, it is difficult to reflect construction design, field information, and the like in the system design, and the design content may be unreasonable from the viewpoint of, for example, the amount of construction on site. In addition, for example, in construction design, due to insufficient recognition of a local situation, backward work due to interference (disturbance) of installed equipment or design review may occur from the viewpoint of carrying in and out of equipment. Furthermore, for example, since the downstream design department does not necessarily grasp the upstream design content, there is a problem that it takes time and effort to collect information on the upstream design.

The present invention has been made in view of the above circumstances. An object of the present invention is to provide a design support technology that enables rational design to be obtained among a plurality of designs in a case where the design of the entire plan is configured by the plurality of designs, such as a design operation of a power plant or the like.

In order to solve the above issues, a design support device of the present invention includes a virtual space creation unit, a communication unit, and an object control unit. The virtual space creation unit creates image data of a three-dimensional virtual space simulating a site to be designed. The communication unit is communicably connected to a plurality of external devices used by a plurality of users. In addition, the communication unit transmits the image data of the virtual space created by the virtual space creation unit to a plurality of external devices, and receives information of a predetermined operation related to design performed by each of the plurality of users on the virtual space in each of their own external device. The object control unit has a function of creating an object simulating equipment to be designed in the virtual space. In a case where information of a creation operation of a predetermined object performed by a predetermined user included in the plurality of users in the virtual space is input via the communication unit, the object control unit creates image data of the predetermined object. In addition, the object control unit creates attribute information of a predetermined object that can be referred to by other users, and outputs image data and attribute information of the predetermined object to the plurality of external devices via the communication unit.

Further, in order to solve the above issues, a design support system of the present invention includes a plurality of information processing devices used by each of a plurality of users, and the design support device of the present invention.

### BRIEF DESCRIPTION OF DRAWINGS

FIG. 1 is a configuration diagram of a design support system according to an embodiment of the present invention;
FIG. 2 is a hardware configuration diagram of a computer device applicable as a design support device and a designer terminal included in a design support system according to an embodiment of the present invention;
FIG. 3 is a functional block configuration diagram of the design support device according to an embodiment of the present invention;
FIG. 4 is a functional block configuration diagram of the designer terminal included in the design support system according to an embodiment of the present invention;
FIG. 5 is a diagram illustrating an operation example of an object creating unit of the design support device according to an embodiment of the present invention;
FIG. 6 is a diagram illustrating an operation example of the object creating unit of the design support device according to an embodiment of the present invention;
FIG. 7 is a diagram illustrating an operation example of an object combining unit of the design support device according to an embodiment of the present invention;
FIG. 8 is a diagram illustrating an operation example of the object combining unit of the design support device according to an embodiment of the present invention;
FIG. 9 is a diagram illustrating an operation example of the object combining unit of the design support device according to an embodiment of the present invention;
FIG. 10 is a diagram illustrating an operation example of a cable route calculation unit of the design support device according to an embodiment of the present invention;
FIG. 11 is a diagram illustrating an operation example of the cable route calculation unit of the design support device according to an embodiment of the present invention;
FIG. 12 is a diagram illustrating an operation example of an object arrangement determination unit of the design support device according to an embodiment of the present invention;
FIG. 13 is a diagram illustrating an operation example of an object movement determination unit of the design support device according to an embodiment of the present invention;
FIG. 14 is a diagram for describing an operation example of an information retrieval unit of the design support device according to an embodiment of the present invention;
FIG. 15 is a diagram illustrating an operation example of a concurrent design support work (operation of changing an object) using the design support system according to an embodiment of the present invention;
FIG. 16 is a diagram illustrating an operation example of a concurrent design support work (retrieval operation for object-related information) using the design support system according to an embodiment of the present invention; and
FIG. 17 is a diagram illustrating an operation example of a concurrent design support work (object arrangement determination work) using the design support system according to an embodiment of the present invention.

### DETAILED DESCRIPTION

Hereinafter, a design support device and a design support system including the same according to an embodiment of the present invention will be specifically described with reference to the drawings. Hereinafter, as an example, a design support device and a design support system that can be used in a design operation for a power plant will be described.

### [Configuration of Design Support System]

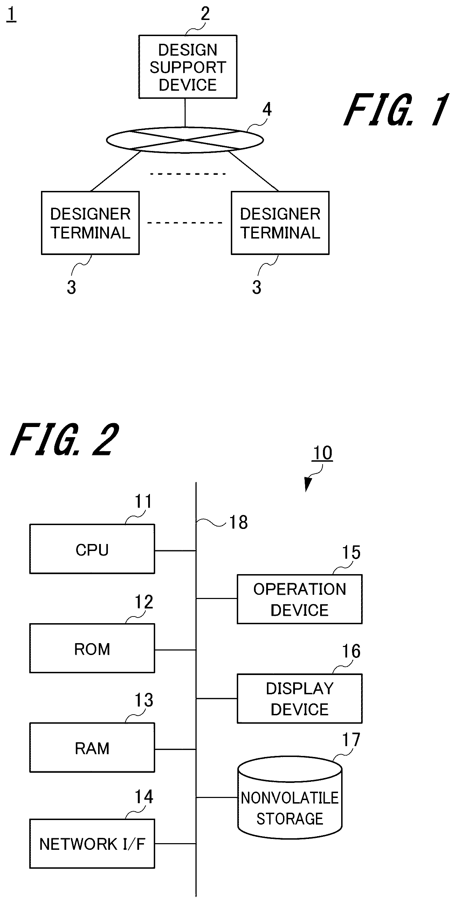

FIG. 1 is a configuration diagram of a design support system 1 according to an embodiment of the present invention. As illustrated in FIG. 1, a design support system 1 includes a design support device 2 and a plurality of designer terminals 3 (external devices). Then, the design support device 2 is communicably connected to each of the plurality of designer terminals 3 via a communication network 4.

The design support device 2 includes an information processing device such as a computer device 10 described later (see FIG. 2 described later). The design support device 2 has a function of creating a three-dimensional virtual space that simulates the inside and appearance of a facility (site) such as a building of a power plant to be designed. Then, the design support device 2 provides various functions that enable all designers of upstream design and downstream design engaged in plant design work to access the virtual space and execute design work in the virtual space. That is, the design support device 2 is a device that supports concurrent design work by all designers engaged in the plant design work in the virtual space simulating the inside and appearance of a facility such as a building of a power plant. Various functions of the design support device 2 will be described later with reference to the drawings.

Each of the designer terminals 3 is an information processing device used by each designer (user) engaged in plant design work, for example, a person in charge of each design work such as system design, equipment design, construction design, and site construction plan, and includes an information processing device such as the computer device 10 described later (see FIG. 2 described later). Specifically, each of the designer terminals 3 can be configured by, for example, an information processing device having a calculation function and a communication function, such as a personal computer, a smartphone, or a tablet. Note that, in the present embodiment, an example in which the plurality of designer terminals 3 has the same configuration will be described, but some of the plurality of designer terminals 3 may have different configurations, or the plurality of designer terminals 3 may have different configurations each other.

The designer terminals 3 receive the image data of the virtual space created by the design support device 2, and displays the image data of the virtual space on a display unit 34 to be described later. In addition, the designer terminals 3 acquires operation information regarding an access operation of the designer to the virtual space created by the design support device 2, a work operation of the designer in the virtual space, and the like, and transmits the operation information to the design support device 2 via the communication network 4.

Note that the design support device 2 that has received the operation information from the designer terminal 3 carries out image control processing such that the operation of the designer corresponding to the operation information is reflected in the virtual space, and transmits the image data of the virtual space subjected to the image control processing and the object to be described later to the plurality of designer terminals 3. As a result, an image reflecting the operation of the designer is displayed in a virtual space displayed on a display unit 34 to be described later of the designer terminal 3. Note that various functions of the designer terminal 3 will be described later with reference to the drawings.

The communication network 4 may include, for example, a local area network (LAN) or a wide area network (WAN) such as the Internet, and may perform wired or wireless communication. Note that, in a case where the design support device 2 and the plurality of designer terminals 3 are arranged at a short distance (for example, in a case where they are arranged in the same room), for example, a short-range wireless communication system such as Bluetooth (registered trademark) or WiFi (registered trademark) may be used as a communication system in the communication network 4.

### [Hardware Configuration of Design Support Device and Designer Terminal]

FIG. 2 is a block diagram illustrating an example of a hardware configuration of the computer device 10 applicable as the design support device 2 and the designer terminal 3.

As illustrated in FIG. 2, the computer device 10 includes a central processing unit (CPU) 11, a read only memory (ROM) 12, and a random access memory (RAM) 13 connected to a bus line 18. In addition, the computer device 10 includes a network interface (I/F) 14 connected to a bus line 18, an operation device 15, a display device 16, and a nonvolatile storage 17. Although not illustrated in FIG. 2, the computer device 10 also includes various interfaces used when input/output processing of various data (various kinds of information) is executed with an external device.

The CPU 11 reads a program code of software for realizing various processing functions provided in each of the design support device 2 and the designer terminals 3 from the ROM 12 to the RAM 13 and executes the program code. At this time, various kinds of data such as variables and parameters generated during the arithmetic processing are temporarily written in the RAM 13.

The network I/F 14 includes, for example, a network interface card (NIC) or the like, and transmits and receives various kinds of data to and from each device connected via wireless communication.

The operation device 15 includes, for example, keys, buttons, and the like, generates an operation signal corresponding to operation content input by an operator (designer or the like), and supplies the operation signal to the CPU 11. The display device 16 includes, for example, a liquid crystal panel, and displays characters, images, and the like on a screen. In addition, the display device 16 may be configured by a touch panel, and in this case, the display device 16 and the operation device 15 are integrally configured.

In the design support system 1 of the present embodiment, the designer operates the operation device 15 such as a key, a button, a mouse, or a touch panel provided in the designer terminals 3 to execute various operations in the virtual space displayed on the display screen of the display device 16.

In addition, in the design support system 1 of the present embodiment, the designer can perform various operations in the virtual space using a head mounted display (HMD) and a controller used by being held in a hand or worn. In this case, in the designer terminal 3, the HMD in which the virtual space is displayed serves as the display device 16, and the controller for performing various operations in the virtual space displayed on the HMD serves as the operation device 15. Furthermore, in this case, in the designer terminal 3, the HMD (display device 16), the controller (operation device 15), and the CPU 11 may be communicably connected using, for example, a short-range wireless communication system such as Bluetooth or WiFi.

The nonvolatile storage 17 can be configured by, for example, a hard disk drive (HDD), a solid state drive (SSD), a flexible disk, an optical disk, a magneto-optical disk, a compact disc (CD)-ROM, a CD-R, a magnetic tape, a nonvolatile memory, or the like. The nonvolatile storage 17 stores various programs for causing the computer device 10 to function as each of the design support device 2 and the designer terminal 3, in addition to an operating system (OS) and various parameters. Note that information (data) such as a program, a table, and a file for realizing each function provided in each of the design support device 2 and the designer terminal 3 may be stored in a recording medium such as an integrated circuit (IC) card, an SD card, and a digital versatile disc (DVD), for example, in addition to the ROM 12 and the nonvolatile storage 17.

In a case where the design support device 2 is configured as a server device, the design support device 2 is not necessarily configured to include the operation device 15 and/or the display device 16 described above.

### [Functional Configuration of Design Support Device]

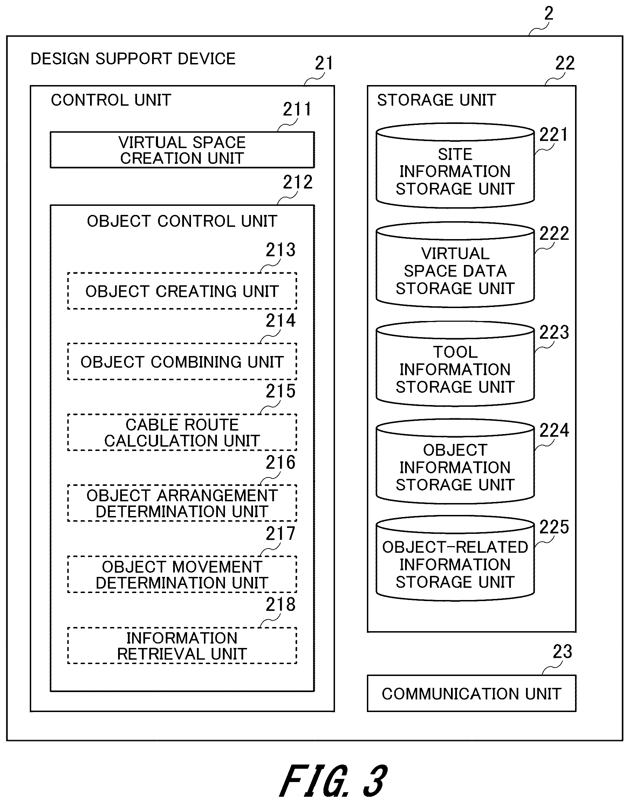

FIG. 3 is a functional block configuration diagram of the design support device 2 according to an embodiment of the present invention. As illustrated in FIG. 3, the design support device 2 includes a control unit 21, a storage unit 22, and a communication unit 23.

The control unit 21 is included in the CPU 11 in FIG. 2, reads a program code for realizing various functions, which will be described later, executable by the design support device 2 from the ROM 12 in FIG. 2 to the RAM 13, and executes the program code. The storage unit 22 is included in the nonvolatile storage 17 and/or the RAM 13 in FIG. 2, is constituted by a memory capable of reading and writing data, and stores various types of information used in processing for realizing various functional units included in the control unit 21. In addition, the communication unit 23 is included in the network I/F 14 in FIG. 2, and transmits and receives various types of information (data) to and from the plurality of designer terminals 3 connectable via the communication network 4.

### (Control Unit)

As illustrated in FIG. 3, the control unit 21 functionally includes a virtual space creation unit 211 and an object control unit 212.

The virtual space creation unit 211 creates image data of the three-dimensional virtual space that simulates the inside and appearance of a facility (site) such as a building of a power plant to be designed. Specifically, the virtual space creation unit 211 creates the image data of the three-dimensional virtual space using the point cloud data and/or the three-dimensional CAD data of the actual site of the power plant to be designed stored in a site information storage unit 221 to be described later in the storage unit 22. Note that an existing technique can be used as a method of creating image data of the three-dimensional virtual space.

In addition, the virtual space creation unit 211 outputs the created image data of the virtual space of the power plant to the communication unit 23. As a result, the image data of the virtual space of the power plant is transmitted to each of the designer terminals 3 via the communication network 4, and the image of the virtual space is displayed on a display unit 34 to be described later (for example, a liquid crystal panel or an HMD) of each of the designer terminals 3.

The object control unit 212 acquires, via the communication network 4, operation information corresponding to an object creation operation, various editing operations, or the like performed on the virtual space by the designer in the designer terminals 3, and performs image processing of the object according to the operation information. Then, the object control unit 212 outputs the image data of the object subjected to the image processing corresponding to the operation information to the communication unit 23. As a result, the image data of the object after the image processing is transmitted to each of the designer terminals 3 via the communication network 4, and the image data is displayed on the display unit 34 to be described later (for example, a liquid crystal panel or an HMD) of each of the designer terminals 3. That is, an image reflecting an operation performed by the designer on the virtual space is displayed on the display unit 34 to be described later of each of the designer terminals 3.

Note that the "object" referred to herein is equipment installed in a space or an outer wall portion in a facility such as a building of a power plant, for example, a pipe, a conduit, a connection box, a valve, a board, a rack, a device, or the like. In addition, the image data of the object created by the object creating unit 213 is, for example, image data simulating the equipment such as a pipe, a conduit, a connection box, a valve, a board, a rack, or a device. Such image data of the object for each type of the equipment to be designed is stored in advance in a tool information storage unit 223 described later in the storage unit 22.

As illustrated in FIG. 3, the object control unit 212 includes an object creating unit 213, an object combining unit 214, a cable route calculation unit 215, an object arrangement determination unit 216, an object movement determination unit 217, and an information retrieval unit 218. These components are functional units for realizing various design support functions included in the design support device 2, and specific operation examples of the components will be described later with reference to the drawings.

Note that FIG. 3 illustrates only a part of main functional units included in the object control unit 212, and omits illustration of various functional units for realizing other various design support functions necessary for plant design. For example, although not illustrated as a functional block, in addition to each functional unit in FIG. 3, the object control unit 212 has a processing function that enables selection of an object in the virtual space displayed on the designer terminal 3 (object selection function) by a designer's selection operation. In addition, the object control unit 212 has a processing function for moving an object displayed on the designer terminal 3 in the virtual space by a movement operation of the designer on the object (object movement function). Furthermore, the object control unit 212 has a processing function for displaying the attribute information on a display unit 34 to be described later of the designer terminal 3 (attribute information display function) when the designer performs a display (reference) operation of the attribute information to be described later associated with the object. Then, in the present embodiment, the object selection function, the object movement function and the attribute information display function can be operated in common at the time of execution of each functional unit in FIG. 3 included in the object control unit 212.

### (Storage Unit and Communication Unit)

The storage unit 22 stores, for example, various types of information necessary for creating the virtual space, image data of the virtual space, image data of the object obtained by various types of image processing by the control unit 21, and attribute information, related information of the object and image data of each designer's avatar that are to be described later, and the like. An internal configuration of the storage unit 22 will be described later with reference to the drawings.

The communication unit 23 transmits the virtual space and the image data of the object created by the control unit 21, the information of the object (attribute information and the like), the image data of the avatar of each designer, and the like to the plurality of designer terminals 3 connectable via the communication network 4. In addition, the communication unit 23 receives various operation information of each designer for the virtual space transmitted from each of the plurality of designer terminals 3, and outputs the received various operation information to the control unit 21.

### [Operation Content of Functional Unit included in Object Control Unit]

### (Object Creating Unit)

The design support device 2 of the present embodiment has a function by which a designer can generate a desired object and freely arrange the object at any position in a virtual space, and the object creating unit 213 realizes the function.

Specifically, the object creating unit 213 creates image data of an object on the basis of the operation information corresponding to a creation operation of the object performed by the designer on the virtual space, which is input from the designer terminal 3 via the communication network 4 and the communication unit 23. An existing technique can be used as a method of creating image data of the object. Furthermore, the object creating unit 213 arranges the created object at a predetermined position in the virtual space on the basis of the operation information.

Furthermore, when creating the image data of the object, the object creating unit 213 also creates attribute information of the object. The attribute information includes, for example, various types of information of the object such as a management number, a name, an installation position (coordinates in the virtual space), an installation area name, a size, a type, restriction conditions on installation (arrangement), a creator, a comment of the creator, and date and time of creation, and these pieces of information are combined into one set.

The designer (object creator) can input (set) these pieces of information included in the attribute information by operating an operation unit 33 (for example, a key, a button, a mouse, a touch panel, a controller, or the like) to be described later of the designer's own designer terminal 3. Then, the object creating unit 213 creates the attribute information on the basis of the designer's input operation of the attribute information, associates the created attribute information with the image data of the corresponding object, and stores the attribute information in an object information storage unit 224 described later in the storage unit 22. Note that the information included in the attribute information varies depending on, for example, the type of the object, and can be freely set by the designer.

Then, the object creating unit 213 outputs the image data and the attribute information of the created object to the communication unit 23. As a result, the image data and the attribute information of the object are transmitted to each of the designer terminals 3 via the communication network 4, and the image of the object is displayed at a predetermined position in the virtual space displayed on a display unit 34 to be described later of each of the designer terminals 3.

In addition, the design support device 2 of the present embodiment has a function by which a designer can perform, for example, an operation of changing a shape or an arrangement position of an object displayed in a virtual space, and the object creating unit 213 also realizes the function. Then, when the designer performs a change operation of the object, the object creating unit 213 changes (updates) the image data and the attribute information of the object to be changed according to the change operation.

Specifically, when the designer performs a change operation on a created object in a virtual space displayed on the display unit 34 to be described later of the designer's own designer terminal 3, operation information of the change operation is input from the designer terminal 3 to the object creating unit 213 via the communication network 4 and the communication unit 23. Then, the object creating unit 213 changes (updates) the image data and the attribute information of the object to be changed on the basis of the input operation information of the change operation of the object, and transmits the image data and the attribute information of the object after the change to each of the designer terminals 3 via the communication unit 23. As a result, the image of the changed object is displayed in the virtual space displayed on the display unit 34 to be described later of each designer terminal 3, and the change operation of the designer is reflected. At this time, the object creating unit 213 updates the image data and the attribute information of the object to be changed stored in the object information storage unit 224 described later in the storage unit 22.

As the object change operation, for example, a method can be used in which a designer changes, for example, the size and arrangement position of the object included in the attribute information of the object by operating the operation unit 33 described later. Furthermore, as the object change operation, for example, a method in which a designer directly deforms the shape of the display image of the object or moves the display image in the virtual space by operating the operation unit 33 to be described later can also be used.

Note that, in the present embodiment, the change operation on the object created in the virtual space can be executed not only by the designer who created the object but also by other designers. Further, in the present embodiment, not only the change operation on the object but also other various operations on the object can be executed by not only the designer who created the object but also other designers.

Furthermore, in the present embodiment, although not illustrated, an image of an object creation tool operable by a designer is displayed on a display screen of the display unit 34 (for example, a liquid crystal panel or an HMD) described later of the designer terminal 3 separately from the image of the virtual space. At this time, the image of the object creation tool may be configured to be always displayed outside the image of the virtual space, for example, or may be configured to be displayed in an overlapping manner with the image of the virtual space by an operation at the time of using the creation tool by the designer. Note that the object creation tool includes selection buttons for the type of the object or the like, an input form of attribute information, and the like, and image data of the creation tool is stored in advance in the tool information storage unit 223 described later in the storage unit 22.

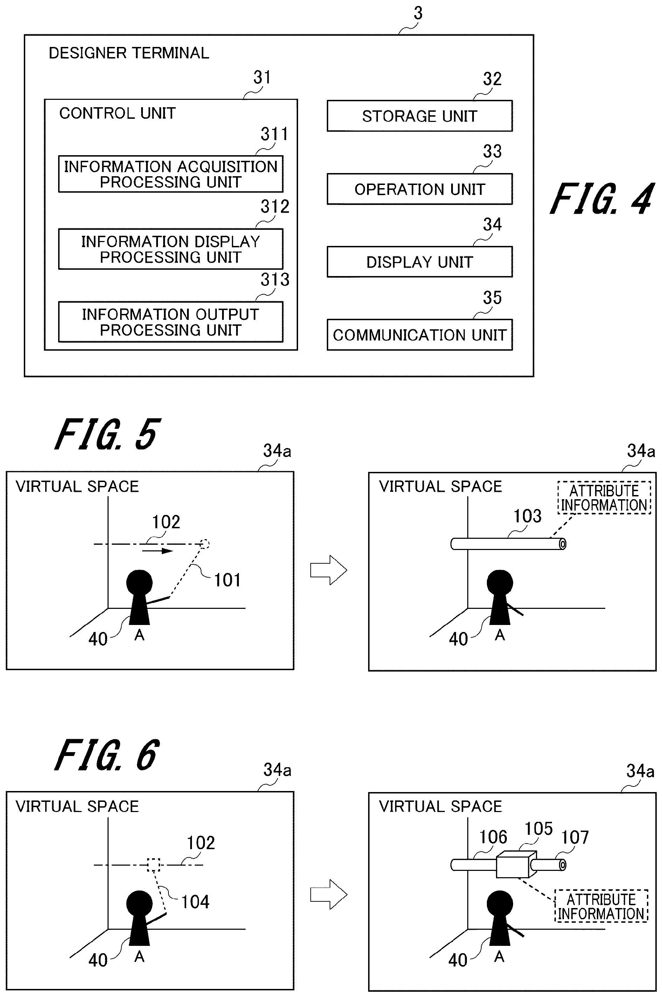

Then, at the time of creating an object, the designer can create a desired object at a predetermined position in the virtual space by performing a predetermined creation operation at the predetermined position in the virtual space after selecting the type of the object or the like with the object creation tool in the virtual space displayed on the display unit 34 to be described later of the designer's own designer terminal 3 (see FIGS. 5 and 6 to be described later).

### (Object Combining Unit)

The design support device 2 of the present embodiment has a function of combining a plurality of objects of the same type arranged in the virtual space to create one object, and the object combining unit 214 realizes the function.

When combining a plurality of objects, the designer selects a plurality of objects arranged in a virtual space displayed on the display unit 34 to be described later of the designer's own designer terminal 3, and performs the plurality of object combining operations. As a result, operation information corresponding to the combining operation is input from the designer terminal 3 to the object combining unit 214 (object control unit 212) via the communication network 4 and the communication unit 23.

Then, the object combining unit 214 combines (integrates) a plurality of objects arranged in the virtual space to create one object on the basis of the operation information corresponding to the input combining operation. As a method of combining (integrating) image data of a plurality of objects, an existing technology can be used. Note that, in the present embodiment, a plurality of types of combining functions is provided as a function of combining a plurality of objects by the object combining unit 214, and these combining functions will be described later with reference to the drawings.

In addition, the object combining unit 214 changes the attribute information of the plurality of uncombined objects stored in the object information storage unit 224 described later in the storage unit 22 to the attribute information of one combined object. In the present embodiment, basically, the attribute information of the main object among the plurality of uncombined objects (for example, the object having the smallest management number) is inherited to the attribute information of the combined object.

Specifically, for information that is not changed by the combining operation (for example, management number, name, and the like: first information) among the information included in the attribute information, the object combining unit 214 inherits the information of the main object (for example, the object having the smallest management number) among the plurality of uncombined objects with the attribute information of the combined object. On the other hand, the object combining unit 214 changes information changed by the combining operation (for example, a size or the like: second information) among the information included in the attribute information by using corresponding information of a plurality of uncombined objects. For example, the object combining unit 214 sets the length of the combined object as the sum of the lengths of the plurality of uncombined objects.

That is, in the present embodiment, the attribute information of the combined object is obtained by updating the information changed by the combining operation (for example, the size or the like) to the information corresponding to the combined object in the attribute information of the uncombined main object. Note that attribute information of objects other than the main object among the plurality of uncombined objects is deleted when the attribute information of the combined object is created.

Then, the object combining unit 214 outputs the image data and the attribute information of the combined object to the communication unit 23. As a result, the image data and the attribute information of the combined object are transmitted to each of the designer terminals 3 via the communication network 4, and the image of the combined object is displayed in the virtual space displayed on the display unit 34 to be described later of each of the designer terminals 3 to reflect the combining operation of the designer.

Note that, in the present embodiment, although not illustrated, an image of an object combining tool operable by a designer is displayed on a display screen of the display unit 34 (for example, a liquid crystal panel or an HMD) described later of the designer terminal 3 separately from the image of the virtual space. At this time, the image of the object combining tool may be configured to be always displayed outside the image of the virtual space, for example, or may be configured to be displayed in an overlapping manner with the image of the virtual space by an operation at the time of using the combining tool by the designer. Note that the object combining tool includes execution buttons for the combining function and the like, and image data of the combining tool is stored in advance in the tool information storage unit 223 described later in the storage unit 22.

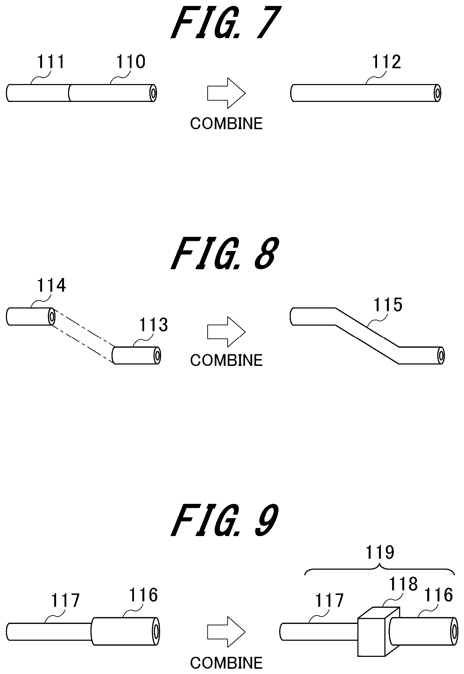

Then, at the time of object combining, the designer selects a plurality of objects to be combined in a virtual space displayed on the display unit 34 to be described later of the designer's own designer terminal 3, and then operates an execution button of a combining tool of the objects to combine the plurality of objects (see FIGS. 7 to 9 and the like to be described later).

### (Cable Route Calculation Unit)

A cable (for example, an electric cable, a communication cable, or the like) connecting two pieces of equipment (objects) is laid from one facility to a conduit, a tray, or the like installed on a ceiling or the like of the equipment via the conduit or the duct, and laid and connected to the other facility. The design support device 2 of the present embodiment has a function of calculating an optimum cable route between two objects in a case where there is a plurality of routing paths (hereinafter, referred to as a "cable route") of a cable for connecting two objects (equipment) by the cable in the virtual space. The cable route calculation unit 215 executes the optimum cable route calculation function (extraction function).

In the calculation processing of the cable route by the cable route calculation unit 215, basically, the cable route with the shortest length of the cable laid between two objects (equipment) and the length thereof are calculated. Note that the length of the cable route between the two objects is calculated on the basis of the installation position included in the attribute information of each object (arrangement position information) and the installation position included in the attribute information of an object such as a conduit or a duct arranged on the cable route. In addition, when the use (for example, dedicated to communication or the like) of a part of the plurality of conduits arranged on the cable route is predetermined, the cable route calculation unit 215 calculates the optimum cable route also in consideration of the information on the use (application limiting information) included in the attribute information of the object of the part of the conduits.

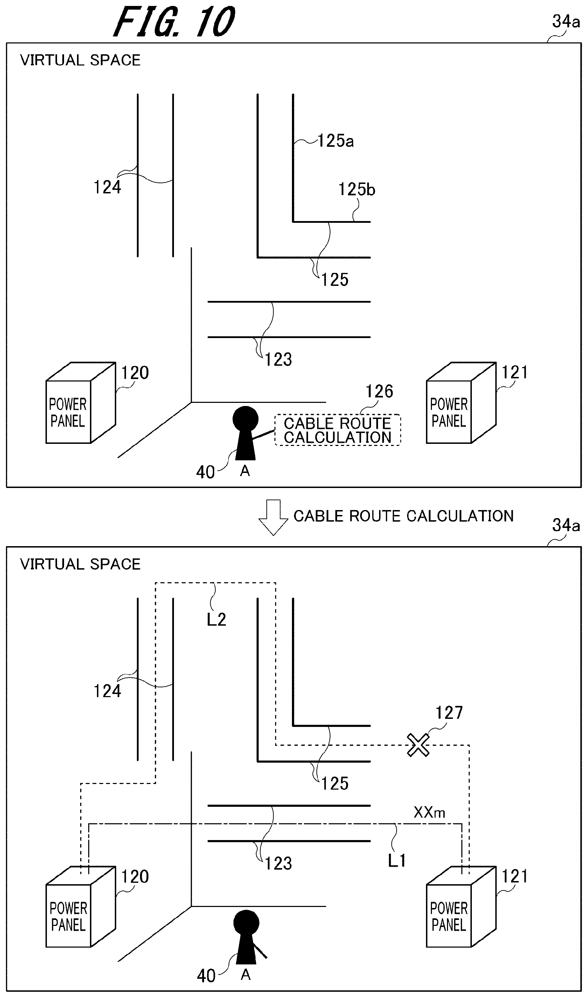

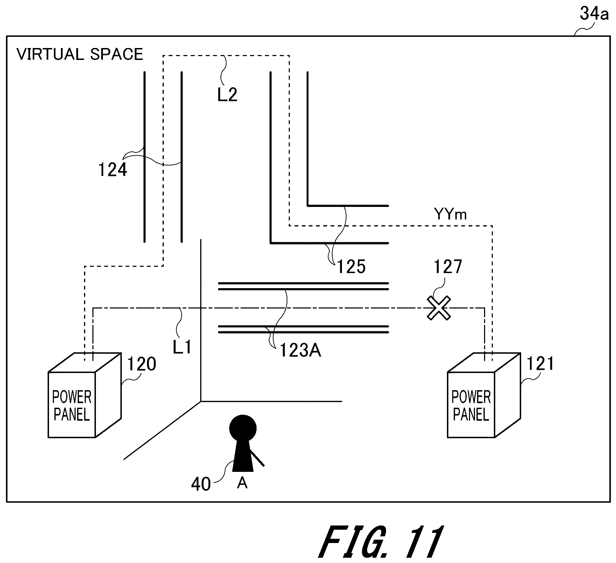

The cable route calculation unit 215 outputs information on the calculation result of the optimum cable route to the communication unit 23. As a result, the information on the calculation result of the optimum cable route is transmitted to each of the designer terminals 3 via the communication network 4, and the information on the optimum cable route between the two objects (equipment) is displayed in the virtual space displayed on the display unit 34 to be described later of each of the designer terminals 3. A display mode of the information on the calculation result of the optimum cable route by the cable route calculation unit 215 will be described later with reference to the drawings (see FIGS. 10 and 11 to be described later).

In addition, the cable route calculation unit 215 stores information on an optimal cable route between two objects (equipment) in the object information storage unit 224 to be described later in the storage unit 22. The information on the optimum cable route includes, for example, information such as a management number of the cable route, a management number of two objects connected by the cable, a management number of a conduit (object) to be used, and a length of the cable route.

Note that the function of calculating the optimum cable route by the cable route calculation unit 215 described above can also be executed in a case where there is only one cable route between two objects (equipment). In this case, the one cable route is extracted as the optimum cable route, and the length thereof is calculated. Also in this case, information on the calculation result of the optimum cable route is transmitted to each of the designer terminals 3 via the communication network 4 and displayed on the display unit 34 to be described later of each of the designer terminals 3.

In the present embodiment, although not illustrated, an image of a calculation tool of the cable route operable by a designer is displayed on a display screen of the display unit 34 (for example, a liquid crystal panel or an HMD) described later of the designer terminal 3 separately from the image of the virtual space. At this time, the image of the calculation tool of the cable route may be configured to be always displayed outside the image of the virtual space, for example, or may be configured to be displayed in an overlapping manner with the image of the virtual space by an operation at the time of using the calculation tool of the cable route by the designer. Note that the calculation tool of the cable route includes an execution button of a cable route calculation function and the like, and image data of the calculation tool is stored in advance in the tool information storage unit 223 described later in the storage unit 22.

Then, at the time of the calculation processing of the optimum cable route, the designer selects two objects (equipment) subject to the calculation of the cable route in the virtual space displayed on the display unit 34 to be described later of the designer's own designer terminal 3, and then operates the execution button of the cable route calculation tool, so that the optimum cable route between the two objects is calculated and the information is displayed (see FIGS. 10 and 11 to be described later).

### (Object Arrangement Determination Unit)

The design support device 2 of the present embodiment has a function of determining whether or not a predetermined object (equipment) created at a predetermined position in the virtual space satisfies an arrangement condition of the predetermined object (hereinafter, referred to as "arrangement determination function"). The object arrangement determination unit 216 executes processing of the object arrangement determination function.

Note that the arrangement condition of the object (equipment) includes, for example, a temperature condition, a humidity condition, a radiation condition under which the equipment can be arranged, a distance condition from other objects necessary for suppressing an influence of heat or the like generated from the other object (equipment: interference object), a condition of an empty space at an arrangement position, and the like. The information of these arrangement conditions is set by the object creator or the like at the time of creating the object, and is included in the attribute information.

The object arrangement determination unit 216 refers to information on an arrangement condition of an object (equipment) subject to arrangement determination and attribute information of other objects (equipment) arranged around the object, and performs determination processing on whether the arrangement condition of the object is satisfied. Then, the object arrangement determination unit 216 outputs the result of the arrangement determination processing to the communication unit 23. As a result, the information on the result of the arrangement determination processing of the object is transmitted to each of the designer terminals 3 via the communication network 4, and the information on the arrangement determination result of the object subject to the arrangement determination is displayed in the virtual space displayed on the display unit 34 to be described later of each of the designer terminals 3.

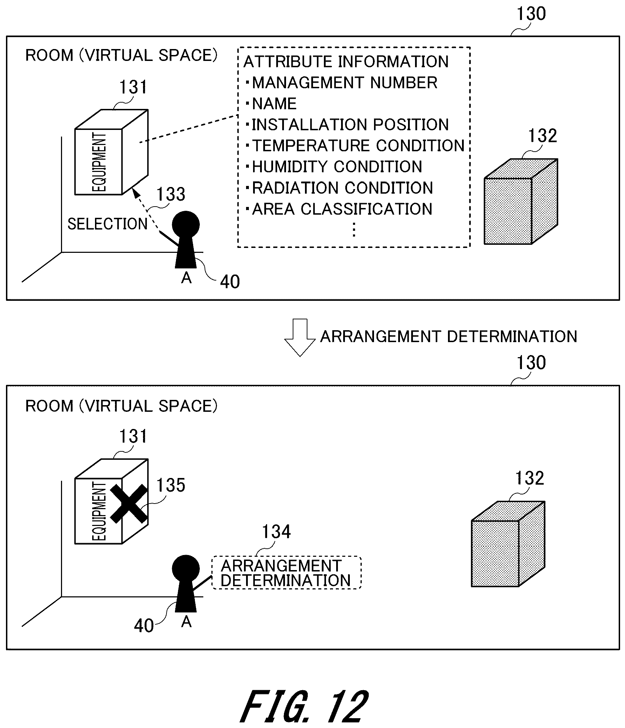

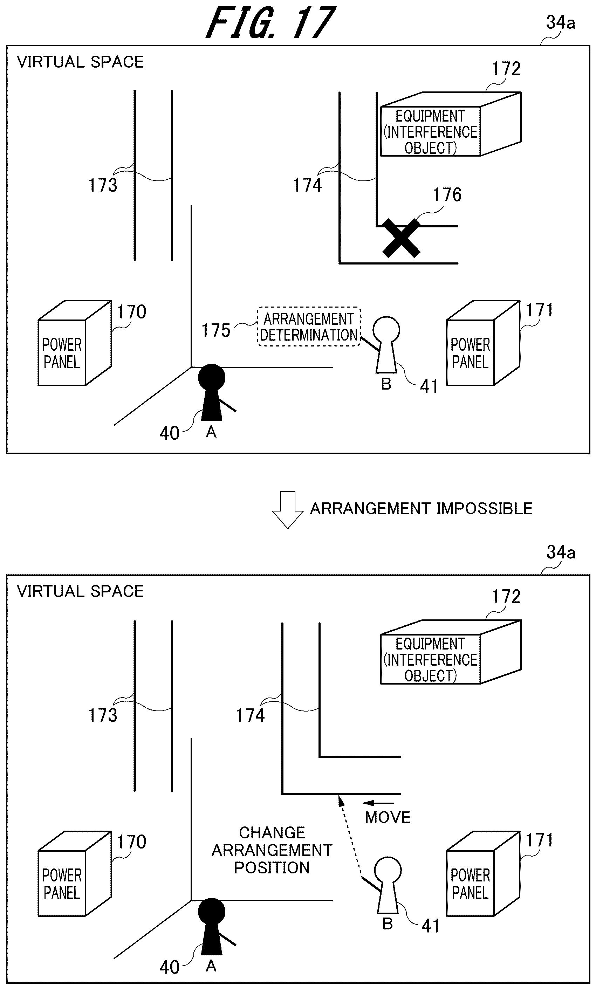

At this time, when the arrangement determination result indicates that arrangement is impossible, an image indicating that arrangement is impossible is displayed on the virtual space. A display mode of the information on the result of the object arrangement determination by the object arrangement determination unit 216 will be described later with reference to the drawings (see FIGS. 12 and 17 to be described later).

Note that, in the present embodiment, although not illustrated, an image of an object arrangement determination tool operable by a designer is displayed on a display screen of the display unit 34 (for example, a liquid crystal panel or an HMD) described later of the designer terminal 3 separately from the image of the virtual space. At this time, the image of the object arrangement determination tool may be configured to be always displayed outside the image of the virtual space, for example, or may be configured to be displayed in an overlapping manner with the image of the virtual space by an operation at the time of using the object arrangement determination tool by the designer. Note that the object arrangement determination tool includes execution buttons for the arrangement determination function and the like, and image data of the arrangement determination tool is stored in advance in the tool information storage unit 223 described later in the storage unit 22.

Then, at the time of the object arrangement determination processing, the designer selects the object (equipment) that is subject to the arrangement determination in the virtual space displayed on the display unit 34 to be described later of the designer's own designer terminal 3, and then operates the execution button of the object arrangement determination tool to execute the arrangement determination of the object, and information on the determination result is displayed (see FIG. 12 to be described later). Note that, in the object arrangement determination function of the present embodiment, it is also possible to select a plurality of objects and simultaneously perform arrangement determination of the plurality of objects (see FIG. 17 to be described later).

### (Object Movement Determination Unit)

When a predetermined object (equipment) created at a predetermined position in the virtual space is moved in the virtual space, the design support device 2 of the present embodiment has a function of determining an interference state of another object (equipment: interference object) with respect to the movement of the predetermined object (hereinafter, referred to as a "movement determination function"). The object movement determination unit 217 executes processing of the object movement determination function.

The object movement determination unit 217 refers to attribute information (size or the like) of an object (equipment) to be moved and attribute information (arrangement position, size, or the like) of another object arranged around a movement route of the object, and performs determination processing of determining whether or not the object to be moved is movable when it is moved. Specifically, when the object is moved, the object movement determination unit 217 determines, for example, whether or not a movement space is secured along the movement route. Therefore, this object movement determination function can be used, for example, when grasping whether or not a movement space for actually carrying in and out equipment is secured.

Then, the object movement determination unit 217 outputs the result of the movement determination processing to the communication unit 23. As a result, the information on the result of the arrangement determination of the object is transmitted to each of the designer terminals 3 via the communication network 4, and the information on the movement determination result of the object (equipment) to be moved is displayed in the virtual space displayed on the display unit 34 to be described later of each of the designer terminals 3. At this time, when the movement determination result indicates that the movement is possible, an image indicating that the movement is possible is displayed in the virtual space, and when the movement determination result indicates that the movement is not possible, an image indicating that the movement is not possible is displayed in the virtual space.

Note that, in the present embodiment, although not illustrated, an image of an object movement determination tool operable by a designer is displayed on a display screen of the display unit 34 (for example, a liquid crystal panel or an HMD) described later of the designer terminal 3 separately from the image of the virtual space. At this time, the image of the object movement determination tool may be configured to be always displayed outside the image of the virtual space, for example, or may be configured to be displayed in an overlapping manner with the image of the virtual space by an operation at the time of using the object movement determination tool by the designer. Note that the object movement determination tool includes execution buttons for the movement determination function and the like, and image data of the movement determination tool is stored in advance in the tool information storage unit 223 described later in the storage unit 22.

Then, at the time of the movement determination processing of the object (equipment), the designer operates the execution button of the movement determination tool in the virtual space displayed on the display unit 34 to be described later of the designer's own designer terminal 3, and then moves the object subject to the movement determination in the virtual space, so that information on the movement determination result of the object is displayed in the virtual space.

Note that, as a method of moving an object, for example, a method may be adopted in which a designer manually moves an image of an object in a virtual space by operating the operation unit 33 (for example, a key, a button, a mouse, a touch panel, a controller, or the like) described later of the designer's own designer terminal 3. In addition, as a method of moving the object, for example, a method may be adopted in which a movement route of the object is set in advance, and an image of the object automatically moves on the movement route by operating an execution button of the movement determination tool.

Furthermore, in the present embodiment, a function may be provided in which, when a designer operates an execution button of a movement determination tool after selecting an object subject to the movement determination in a virtual space displayed on a display unit 34 to be described later of his/her designer terminal 3 at the time of movement determination processing of an object (equipment), the object acts as an avatar of the designer. In this case, since the object subject to the movement determination is an object also used as the avatar of the designer (hereinafter, it is referred to as an "avatar object"), the movement determination processing is performed by the designer's own movement operation (avatar object) in the virtual space. Therefore, in a case where such a function is used, the designer can more sensuously grasp whether or not the equipment can be moved.

### (Information Retrieval Unit)

The design support device 2 of the present embodiment has a function of retrieving various kinds of related information (hereinafter, referred to as "object-related information") of objects (equipment) arranged in the virtual space. Note that the object-related information includes, for example, various types of information such as an actual appearance image (a photograph, an appearance drawing, or the like) of an object (equipment), a design drawing, a design specification, an equipment specification, an arrangement specification, and legal information regarding arrangement. Note that the object-related information may include redundant information included in the attribute information set (input) at the time of creating the object.

The information retrieval unit 218 performs retrieval and collection processing of the object-related information. At this time, the information retrieval unit 218 executes retrieval processing of related information of an object (equipment) on the basis of, for example, information such as a name included in attribute information of the object selected by an operation of a designer. At this time, a plurality of the objects subject to the information retrieval may be selected. In addition, as a retrieval method, for example, an existing retrieval method such as a method of retrieving in an interactive manner using generative artificial intelligence (AI) or a retrieval method using keyword input can be used.

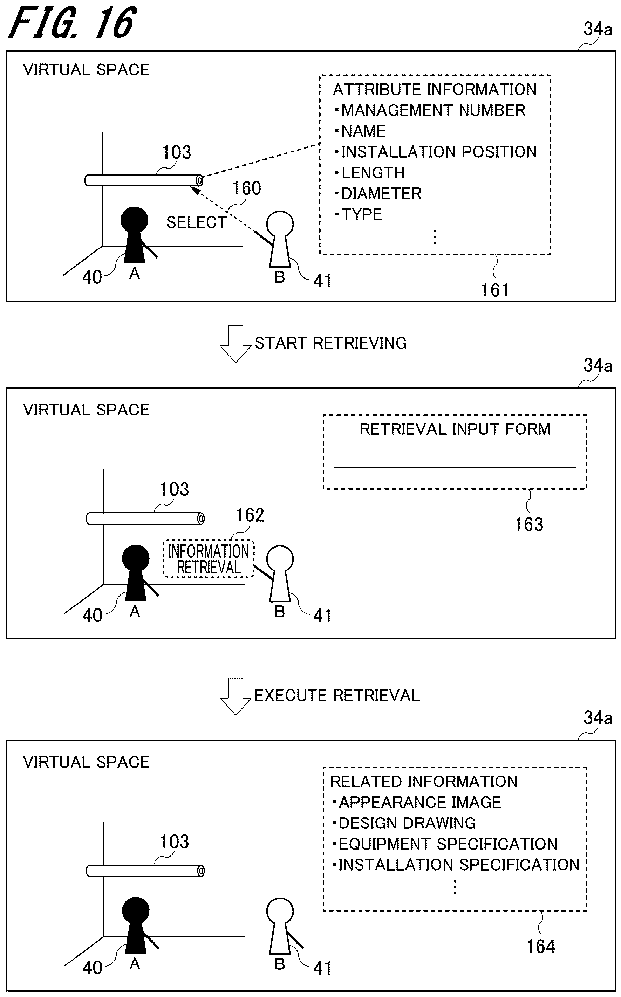

When the designer performs a retrieval operation for the object-related information, the information retrieval unit 218 retrieves (refers to) various types of information stored in an object-related information storage unit 225 described later in the storage unit 22, and collects (acquires) the related information of the object to be retrieved from the various types of information. Then, the information retrieval unit 218 outputs the collected object-related information to the communication unit 23. As a result, the collected object-related information is transmitted to each of the designer terminals 3 via the communication network 4, and the object-related information is displayed in the virtual space displayed on the display unit 34 to be described later of each of the designer terminals 3. A specific display mode of the object-related information will be described later with reference to the drawings (see FIG. 16 described later).

Note that, in the present embodiment, although not illustrated, an image of a retrieval tool of the object-related information operable by a designer is displayed on a display screen of the display unit 34 (for example, a liquid crystal panel or an HMD) described later of the designer terminal 3 separately from the image of the virtual space. At this time, the image of the retrieval tool of the object-related information may be configured to be always displayed outside the image of the virtual space, for example, or may be configured to be displayed in an overlapping manner with the image of the virtual space by an operation at the time of using the retrieval tool of the object-related information by the designer. Note that the retrieval tool of the object-related information includes execution buttons for the information retrieving function and the like, and image data of the retrieval tool is stored in advance in the tool information storage unit 223 described later in the storage unit 22.

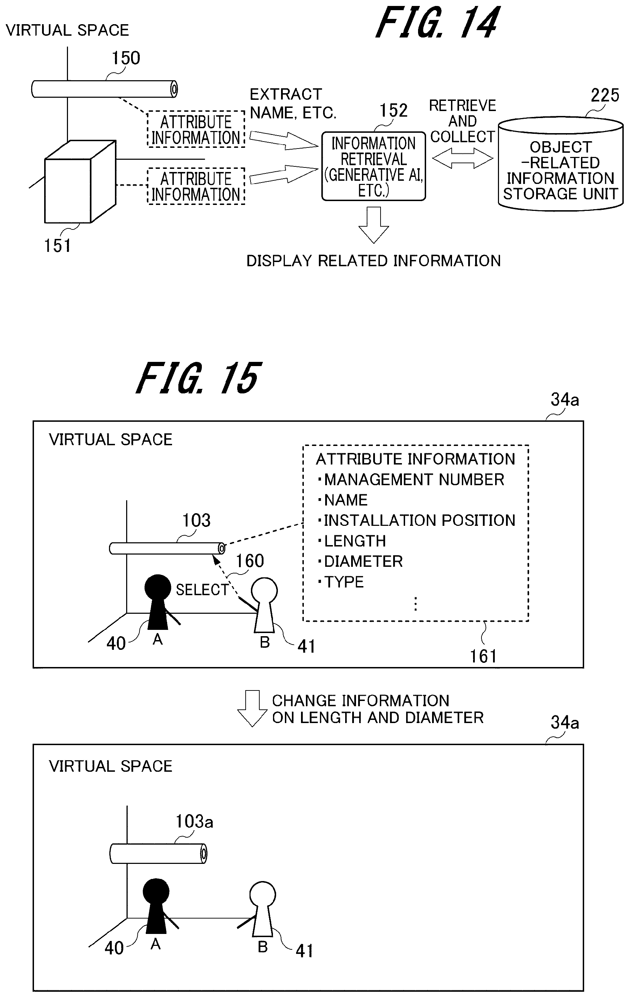

Then, at the time of retrieval processing of the object-related information, the designer selects an object (equipment) to be retrieved in a virtual space displayed on the display unit 34 to be described later of the designer's own designer terminal 3, and then operates an execution button of the retrieval tool, whereby an image (input form or the like) indicating the start of retrieving the object-related information is displayed. Next, the designer inputs information (term) serving as a keyword for the object-related information in the displayed input form or the like, so that information retrieval is executed, and a retrieval result is displayed in the virtual space. Note that the present invention is not limited to this, and the information retrieval may be automatically executed on the basis of the attribute information of the object after the image indicating the start of the retrieving the object-related information is displayed in the virtual space. In addition, in the retrieval function of the object-related information of the present embodiment, it is also possible to select a plurality of objects and simultaneously retrieve the object-related information of the plurality of objects (see FIG. 14 to be described later).

### [Internal Configuration of Storage Unit]

As illustrated in FIG. 3, the storage unit 22 functionally includes a site information storage unit 221, a virtual space data storage unit 222, a tool information storage unit 223, an object information storage unit 224, and an object-related information storage unit 225.

The site information storage unit 221 stores point cloud data and/or three-dimensional CAD data of an actual site of the power plant to be designed. These pieces of information on the site are stored in the site information storage unit 221 in advance, and are used when the virtual space creation unit 211 creates image data of a three-dimensional virtual space that simulates the inside and appearance of a facility (site) such as a building of a power plant.

The virtual space data storage unit 222 stores the image data of the three-dimensional virtual space created by the virtual space creation unit 211.

The tool information storage unit 223 stores, for example, image data of an object that is created in a virtual space and simulates equipment such as pipes, conduits, power panels, racks, connection boxes, valves, and the like. That is, in the present embodiment, for example, image data of an object having a basic shape simulating equipment such as a pipe, a conduit, a power panel, a rack, a connection box, or a valve is stored in the tool information storage unit 223 in the form of a tool box. In addition, the tool information storage unit 223 stores image data of various operation tools (for example, an object creation tool, a combining tool, and the like) that are displayed overlapping with the virtual space or at positions different from the virtual space and that can be operated by the designer when executing the various functions described above. Furthermore, the tool information storage unit 223 also stores image data of the avatar of each designer displayed in the virtual space.

The object information storage unit 224 stores image data of an object created or changed (updated) by the object creating unit 213 and attribute information of the object associated therewith.

In addition, the object-related information storage unit 225 stores various types of information regarding equipment actually installed in the power plant to be designed. That is, for example, various types of object-related information such as an actual appearance image (a photograph, an appearance drawing, or the like) of an object (equipment), a design drawing, a design specification, an equipment specification, an arrangement specification, and legal information regarding arrangement are stored in the object-related information storage unit 225. Then, the object-related information is extracted from the various types of information stored in the object-related information storage unit 225 by the retrieving operation by the information retrieval unit 218. Note that, in the present embodiment, an example in which the object-related information storage unit 225 is provided in the design support device 2 will be described, but the present invention is not limited thereto, and the object-related information storage unit 225 may be provided in a database or the like provided outside the design support device 2.

### [Functional Configuration of Designer Terminal]

FIG. 4 is a functional block configuration diagram of the designer terminal 3. As illustrated in FIG. 4, the designer terminal 3 includes a control unit 31, a storage unit 32, an operation unit 33, a display unit 34, and a communication unit 35. In FIG. 4, for convenience of description, only a processing functional unit related to design support processing using the design support device 2 is illustrated.

The control unit 31 is included in the CPU 11 in FIG. 2, reads a program code for realizing various functions executable by the designer terminal 3 from the ROM 12 in FIG. 2 to the RAM 13, and executes the program code. In addition, the storage unit 32 is included in the nonvolatile storage 17 and/or the RAM 13 in FIG. 2, is constituted by a memory capable of reading and writing data.

The operation unit 33 is included in the operation device 15 in FIG. 2. The display unit 34 is included in the display device 16 in FIG. 2, and includes, for example, a liquid crystal panel, an HMD, or the like. In addition, the communication unit 35 is included in the network I/F 14 in FIG. 2, and transmits and receives various types of information (data) to and from the design support device 2 connectable via the communication network 4.

### (Control Unit)

As illustrated in FIG. 4, the control unit 31 functionally includes an information acquisition processing unit 311, an information display processing unit 312, and an information output processing unit 313.

The information acquisition processing unit 311 acquires the image data of the virtual space created by the design support device 2, the image data of various objects (equipment) arranged in the virtual space, the image data of the avatar of each designer, and the attribute information of each object, which are received by the communication unit 35. Then, the information acquisition processing unit 311 outputs the acquired virtual space, various objects, and the acquired image data of the avatar of each designer to the information display processing unit 312. In addition, the information acquisition processing unit 311 stores the acquired image data and attribute information of each object in the storage unit 32.

The information display processing unit 312 outputs the virtual space, the various objects (equipment), and the image data of the avatar of each designer acquired by the information acquisition processing unit 311 to the display unit 34, and performs control to display these image data on the display unit 34.

Furthermore, the information output processing unit 313 acquires operation signals of, for example, object creation operation, various editing operations (change operation, combining operation, movement operation, and the like), and various determination operations (arrangement determination operation, movement determination operation, and the like) performed on the virtual space by the designer via the operation unit 33, and outputs operation information corresponding to the operation signals to the communication unit 35. As a result, various types of operation information of the designer for the virtual space is transmitted to the design support device 2 via the communication network 4.

### (Storage Unit)

The storage unit 32 stores image data of a three-dimensional virtual space, image data of various objects (equipment) arranged in the virtual space, image data of an avatar of each designer, and attribute information of each object to be displayed on the display unit 34. Furthermore, in the present embodiment, information of an operation performed on the virtual space may be stored in the storage unit 32 by the designer via the operation unit 33. That is, the operation history information of the designer in the design support work of the power plant may be stored in the storage unit 32.

### (Operation Unit)

The operation unit 33 includes, for example, a key, a button, a mouse, a touch panel, and the like provided in the designer terminal 3. Furthermore, in a case where the designer performs design support work using the HMD, the operation unit 33 includes a controller that is used by the designer holding or wearing in the hand. Then, in a case where the designer performs a predetermined operation on the virtual space using the operation unit 33 such as a key, a button, a mouse, a touch panel, or a controller, for example, the operation unit 33 acquires an operation signal corresponding to the predetermined operation and outputs the operation signal to the control unit 31 (information output processing unit 313).

### (Display Unit)

The display unit 34 displays the image data of the three-dimensional virtual space input from the control unit 31 (information display processing unit 312), the image data of various objects (equipment) arranged in the virtual space, and the image data of the avatar of each designer on a display screen 34a provided in the display unit 34 (see FIG. 5 and the like to be described later). In addition, when the designer performs an operation of displaying attribute information on a predetermined object displayed on the display screen 34a, the display unit 34 displays the attribute information of the predetermined object on the display screen 34a.

### (Communication Unit)

The communication unit 35 receives, for example, image data of a three-dimensional virtual space created by the design support device 2, image data of various objects (equipment) arranged in the virtual space, image data of an avatar of each designer, attribute information of each object, and the like via the communication network 4. Furthermore, the communication unit 35 transmits, for example, operation information of the designer for the operation unit 33 input from the control unit 31 (information output processing unit 313) to the design support device 2 via the communication network 4.

### [Operation Example of Various Functions of Design Support Device]

Next, an operation example (an operation example of a designer) of each functional unit included in the design support device 2 will be described with reference to the drawings.

### (Object Creation Function)

First, an example of creation operation (example of creation operation by a designer) of an object (equipment) in the virtual space executed (controlled) by the object creating unit 213 (see FIG. 3) will be described. Note that, here, as an example, an operation example of creating an object of the long equipment (for example, a pipe, a conduit, or the like) (hereinafter, the object of the long equipment is referred to as a "long object") and an operation example of creating an object of the relay equipment (for example, a connection box, a valve, or the like) of the long object equipment (hereinafter, the object of the relay equipment of the long equipment is referred to as a "relay object") will be described.

### (1) Operation Example of Creating Long Object

FIG. 5 is a diagram illustrating an example of a mode of creating a long object displayed on the display screen 34a of the display unit 34 of the designer terminal 3 when, for example, the designer performs an operation of creating a long object such as a pipe or a conduit in the virtual space.

At the start of use of the creation function of a long object, although not illustrated, a designer A first selects a long equipment creation button (not illustrated) in an object creation tool (not illustrated) in the virtual space displayed on the display screen 34a of own designer terminal 3. Thereafter, the designer A operates the operation unit 33(for example, a key, a button, a mouse, a touch panel, a controller, or the like) to draw a line 102 at a predetermined position (appropriate space) in the virtual space (display screen 34a). In this operation, as illustrated in the left diagram in FIG. 5, an image in which an avatar 40 of the designer A draws the line 102 (one-dot chain line) using a long object creation tool 101 is displayed in the virtual space (on the display screen 34a).

Then, when the designer A performs a predetermined resolving operation (not illustrated), an image of a cylindrical long object 103 having the same length as the line 102 is displayed in the virtual space (on the display screen 34a) as illustrated in the right diagram in FIG. 5. With this operation, the long object 103 is created at a predetermined position (appropriate space) in the virtual space. Although not illustrated, at this time, attribute information of the created long object 103 is input (set) by the designer A, and the attribute information is stored in the object information storage unit 224.

Note that the appearance of the long object 103 displayed in the virtual space (on the display screen 34a) may be different from the actual object as long as it can be understood that the object is, for example, a long equipment such as a pipe or a conduit. Furthermore, the appearance of the long object 103 displayed in the virtual space may be changed according to the type of the long equipment, or may be the same regardless of the type of the long equipment.

Furthermore, a designer can freely change the diameter of the long object 103 (information included in the attribute information). As a method of setting the diameter of the long object 103, for example, a method in which a designer sets the diameter of the long object 103 on the creation tool before drawing the line 102 in the virtual space (on the display screen 34a) may be used. In addition, for example, the long object 103 may be created with a diameter of a predetermined default value, and then the designer may change the attribute information to set the diameter to a desired value. In a case where such a function is provided, for example, even when the arrangement position of the long object 103 is a narrow space and the restriction condition of the pipe diameter is strict, the designer can freely change the diameter of the long object 103 and easily obtain visual information such as a detailed spatial position and an arrangement image after construction.

### (2) Operation Example of Creating Relay Object

FIG. 6 is a diagram illustrating an example of a mode of creating a relay object displayed on the display screen 34a of the display unit 34 of the designer terminal 3 when, for example, the designer performs an operation of creating a relay object such as a connection box or a valve in the virtual space.

At the start of use of the creation function of a relay object, although not illustrated, the designer A first selects a relay equipment creation button (not illustrated) in an object creation tool (not illustrated) in the virtual space displayed on the display screen 34a of the own designer terminal 3. Thereafter, the designer A operates the operation unit 33(for example, a key, a button, a mouse, a touch panel, a controller, or the like) to draw a line 102 at a predetermined position (appropriate space) in the virtual space (display screen 34a). In this operation, as illustrated in the left diagram in FIG. 5, an image in which an avatar 40 of the designer A draws the line 102 (one-dot chain line) using a long object creation tool 101 is displayed in the virtual space (on the display screen 34a).

Next, the designer A selects a predetermined position on the line 102 in the virtual space (on the display screen 34a). In this operation, as illustrated in the left diagram in FIG. 6, an image of operation in which an avatar 40 of the designer A selects a predetermined position on the line 102 (one-dot chain line) using a relay object creation tool 104 is displayed in the virtual space (on the display screen 34a).

Then, when the designer A performs a predetermined resolving operation (not illustrated), an image in which the rectangular parallelepiped relay object 105 is provided at a predetermined position on the cylindrical long object having the same length as the line 102 is displayed in the virtual space (on the display screen 34a) as illustrated in the right diagram in FIG. 6. That is, in the virtual space (on the display screen 34a), an object in which the long object 106 and the long object 107 are connected by the relay object 105 is created.

In addition, although not illustrated, at this time, attribute information of each of the created relay object 105, long object 106, and long object 107 is input (set) by the designer A, and these pieces of attribute information are stored in the object information storage unit 224. Note that the present invention is not limited thereto, and at this time, the relay object 105, the long object 106, and the long object 107 may be set as objects of one unit of equipment, and the designer A may input (set) attribute information of the objects.

Note that the appearance of the relay object 105 displayed in the virtual space (on the display screen 34a) may be different from the actual object as long as it can be understood that the object is, for example, relay equipment such as a connection box or a valve. Furthermore, the appearance of the relay object 105 displayed in the virtual space may be changed according to the type of the relay equipment, or may be the same regardless of the type of the relay equipment.

Furthermore, a designer can freely change the size of the relay object 105 (information included in the attribute information). For example, the designer may set the size of the relay object 105 to the actual size on the tool before drawing the line 102 on the virtual space. In addition, for example, the configuration may be such that the relay object 105 is created with a predetermined default size, and then the designer changes the attribute information to set the size of the relay object 105 to the actual size.

### (Object Combining Function)

Next, an example of combining operation (example of combining operation by a designer) of the same type of objects (equipment) arranged in the virtual space executed (controlled) by the object combining unit 214 (see FIG. 3) will be described. Note that the design support device 2 of the present embodiment has the following three types of object combining functions.
- An object combining function in a case where sizes and shapes of two objects in contact with each other on a contact surface are the same (hereinafter referred to as "first combining function").
- An object combining function in a case where two objects are arranged apart from each other (hereinafter referred to as "second combining function").
- An object combining function in a case where sizes and shapes of two objects in contact with each other on a contact surface are different (hereinafter referred to as "third combining function").

Then, in the present embodiment, in a case where two objects (equipment) to be combined are selected by the designer and the combining operation is performed, any one of the first to third combining functions is automatically selected with reference to the attribute information of each of the two objects, and the combining operation is executed. Specifically, the positional relationship between the two objects (contact/non-contact) and the difference in the size and shape of the contact end face of each object are determined on the basis of the information such as the arrangement position, size, and shape included in each attribute information of the two objects, and the type of the combining function is automatically selected. Note that the present invention is not limited thereto, and the designer may manually select the type of the combining function.

### (1) First Combining Function of Objects

FIG. 7 is a diagram illustrating an example of a combination mode of two objects displayed on the display screen 34a of the display unit 34 of the designer terminal 3 when the first combining function is activated for the two objects arranged in the virtual space.

Here, a case will be described in which the two objects to be combined are a long object 110 and a long object 111, and one end surface in the longitudinal direction of the long object 110 is in contact with one end surface in the longitudinal direction of the long object 111 in the virtual space (see the left diagram in FIG. 7). Furthermore, in this example, a case will be described in which the size (diameter) and shape of each of the long object 110 and the long object 111 on the contact surface between the long object 110 and the long object 111 are the same, and the long object 110 is created before the long object 111. Note that such a situation is generated, for example, when the designer wants to extend the length of the long object 110 and creates the long object 111 in contact with one end surface in the longitudinal direction of the long object 110.

At the time of the operation of combining objects, although not illustrated, first, the designer A operates the operation unit 33 in the virtual space displayed on the display screen 34a of the designer terminal 3 of the designer A to select the long object 110 and the long object 111 to be combined. In this operation, although not illustrated, an image in which the avatar 40 of the designer A selects the long object 110 and the long object 111 using the selection tool is displayed in the virtual space (on the display screen 34a).

Next, the designer A uses the operation unit 33 to operate an execution button (not illustrated) of the object combining tool in the virtual space (on the display screen 34a). In this operation, although not illustrated, an image in which the avatar 40 of the designer A presses the execution button of the combining tool is displayed in the virtual space (on the display screen 34a). Furthermore, in the example illustrated in FIG. 7, at the time of this operation, the first combining function is selected by the object combining unit 214 (object control unit 212) on the basis of the attribute information (arrangement relationship, size, and the like) of the long object 110 and the long object 111.

Then, when the designer A performs a predetermined resolving operation (not illustrated), a long object 112 in which the long object 110 and the long object 111 are combined is created (an image of the long object 112 is displayed) in the virtual space (on the display screen 34a) as illustrated in the right diagram in FIG. 7.

At this time, the attribute information of the long object 112 after combining is created. In this example, the previously created long object 110 (having a small management number) is set as the main object, and the attribute information of the long object 110 is inherited as the attribute information of the long object 112 after combining. Specifically, among the information included in the attribute information of the long object 110, information that is not changed by the combining operation (for example, management number, name, diameter, and the like) is inherited by the attribute information of the long object 112 after combining. On the other hand, with respect to the length of the object changed by the combining operation among the pieces of information included in the attribute information of the long object 110, a value obtained by summing the lengths included in the respective pieces of attribute information of the long object 110 and the long object 111 before combining is set as the length of the long object 112 after combining in the attribute information. Then, the attribute information of the long object 110 (main object) updated as described above is set as the attribute information of the long object 112 after combining. Further, at this time, the attribute information of the uncombined long object 111 is deleted.

### (2) Second Combining Function of Objects (Complementary Combining function)

FIG. 8 is a diagram illustrating an example of a combination mode of two objects displayed on the display screen 34a of the display unit 34 of the designer terminal 3 when the second combining function is activated for the two objects arranged in the virtual space.

Here, a case will be described in which the two objects to be combined are a long object 113 and a long object 114, and the long object 113 and the long object 114 are arranged apart from each other in the virtual space (see the left diagram in FIG. 8). Furthermore, in this example, a case will be described in which the size (diameter) and shape of the end surfaces of the long object 113 and the long object 114 are the same, and the long object 113 is created before the long object 114.

At the time of the operation of combining objects, although not illustrated, first, the designer A operates the operation unit 33 in the virtual space displayed on the display screen 34a of the own designer terminal 3 to select the long object 113 and the long object 114 to be combined. In this operation, although not illustrated, an image in which the avatar 40 of the designer A selects the long object 113 and the long object 114 using the selection tool is displayed in the virtual space (on the display screen 34a).

Next, the designer A uses the operation unit 33 to operate an execution button (not illustrated) of the object combining tool in the virtual space (on the display screen 34a). In this operation, although not illustrated, an image in which the avatar 40 of the designer A presses the execution button of the combining tool is displayed in the virtual space (on the display screen 34a). Furthermore, in the example illustrated in FIG. 8, at the time of this operation, the second combining function is selected by the object combining unit 214 (object control unit 212) on the basis of the attribute information (arrangement relationship, size, and the like) of the long object 113 and the long object 114.

Then, when the designer A performs a predetermined resolving operation (not illustrated), a long object 115 in which the long object 113 and the long object 114 are combined is created (an image of the long object 115 is displayed) in the virtual space (on the display screen 34a) as illustrated in the right diagram in FIG. 8. At this time, a complementary object portion 115a connecting the long object 113 and the long object 114 at the shortest is created, and the long object 113 and the long object 114 are combined via the complementary object portion 115a.

At this time, the attribute information of the long object 115 after combining is created. In this example, the previously created long object 113 (having a small management number) is set as the main object, and the attribute information of the long object 113 is inherited as the attribute information of the long object 115 after combining. Specifically, among the information included in the attribute information of the long object 113, information that is not changed by the combining operation (for example, management number, name, diameter, and the like) is inherited by the attribute information of the long object 115 after combining. On the other hand, with respect to the length of the object changed by the combining operation among the pieces of information included in the attribute information of the long object 113, a value obtained by summing the lengths included in the respective pieces of attribute information of the long object 113 and the long object 114 before combining and the length of the complementary object portion 115a is set as the length of the long object 115 after combining in the attribute information. Then, the attribute information of the long object 113 (main object) updated as described above is set as the attribute information of the long object 115 after combining. Further, at this time, the attribute information of the uncombined long object 114 is deleted.

Note that, in the example illustrated in FIG. 8, since no other object (equipment: interference object) is arranged between the long object 113 and the long object 114, the long object 113 and the long object 114 are connected by the linear complementary object portion 115a. However, in a case where another object is arranged between the long object 113 and the long object 114, a complementary object portion that bypasses the other object and has the shortest length is created.

In a case where the above-described second combining function (complementary combining function) of objects is provided, a plurality of long objects can be combined to be created (defined) as one object without strict contact in the virtual space. As a result, it is possible to reduce the trouble of the object creation operation and the attribute information setting (input) operation.

### (3) Third Combining Function of Objects (Relay Object Automatic Insertion Function)

FIG. 9 is a diagram illustrating an example of a combination mode of two objects displayed on the display screen 34a of the display unit 34 of the designer terminal 3 when the third combining function is activated for the two objects arranged in the virtual space.

Here, a case will be described in which the two objects to be combined are a long object 116 and a long object 117, and one end surface in the longitudinal direction of the long object 116 is in contact with one end surface in the longitudinal direction of the long object 117 in the virtual space (see the left diagram in FIG. 9). Furthermore, in this example, an example will be described in which the size (diameter) of each long object on the contact surface between the long object 116 and the long object 117 is different, and the diameter of the former is larger than that of the latter. Note that, in this example, a case where the long object 116 is created before the long object 117 will be described.

At the time of the operation of combining objects, although not illustrated, first, the designer A operates the operation unit 33 in the virtual space displayed on the display screen 34a of the own designer terminal 3 to select the long object 116 and the long object 117 to be combined. In this operation, although not illustrated, an image in which the avatar 40 of the designer A selects the long object 116 and the long object 117 using the selection tool is displayed in the virtual space (on the display screen 34a).

Next, the designer A uses the operation unit 33 to operate an execution button (not illustrated) of the object combining tool in the virtual space (on the display screen 34a). In this operation, although not illustrated, an image in which the avatar 40 of the designer A presses the execution button of the combining tool is displayed in the virtual space (on the display screen 34a). Furthermore, in the example illustrated in FIG. 9, at the time of this operation, the third combining function is selected by the object combining unit 214 (object control unit 212) on the basis of the attribute information (arrangement relationship, size, and the like) of the long object 116 and the long object 117.

Then, when the designer A performs a predetermined resolving operation (not illustrated), a long object 119 in which the long object 116 and the long object 117 are combined via the relay object 118 is created (an image of the long object 119 is displayed) in the virtual space (on the display screen 34a) as illustrated in the right diagram in FIG. 9. In other words, when the third combining function is activated in the example illustrated in FIG. 9, the relay object 118 is automatically inserted (added) between the long object 116 and the long object 117.

At this time, the attribute information of the long object 119 after combining is created. In this example, the previously created long object 116 (having a small management number) is set as the main object, and the attribute information of the long object 116 is inherited as the attribute information of the long object 119 after combining. Specifically, among the information included in the attribute information of the long object 116, information that is not changed by the combining operation (for example, management number, name, and the like) is inherited by the attribute information of the long object 119 after combining. On the other hand, with respect to the length of the object changed by the combining operation among the pieces of information included in the attribute information of the long object 116, a value obtained by summing the lengths included in the respective pieces of attribute information of the long object 116 and the long object 117 before combining and the width of the relay object 118 is set as the length of the long object 119 after combining in the attribute information. Then, the attribute information of the long object 116 (main object) updated as described above is set as the attribute information of the long object 119 after combining. Further, at this time, the attribute information of the uncombined long object 117 is deleted.

Furthermore, in the example illustrated in FIG. 9, the length of each of the long object 116 and the long object 117 constituting the long object 119 after combining is the same as those before combining, but the present invention is not limited thereto. The length of the long object 119 after combining may be a value obtained by summing the lengths of the long object 116 and the long object 117 before combining. In this case, at least one of the length of the long object 116 and the length of the long object 117 after combining is made shorter than that before combining.

Note that the creation of the complementary object portion 115a when the second combining function (complementary combining function) of objects is activated, the creation of the relay object 118 in the third combining function (relay object automatic insertion function), and the like described above may be performed using, for example, generative AI or the like.

In addition, in a case where the method of setting the attribute information of the combined objects at the time of operating the combining function of the objects described with reference to FIGS. 7 to 9 is used, for example, for a long object created by combining a plurality of long objects (piping, conduits, and the like) arranged in a predetermined cable route, a common management number or name according to the cable route can be defined. In this case, for example, it is easy to calculate the number of pipes and conduits necessary for realizing the combined long object defined by the common management number or name in terms of a constant length and to manage the pipe design.

### (Cable Route Calculation Function)

Next, an operation example of calculating (calculation operation example by a designer) an optimal cable route of a cable (for example, an electric cable, a communication cable, or the like) laid out between two objects (equipment) arranged in the virtual space, executed (controlled) by the cable route calculation unit 215 (see FIG. 3) will be described. In the cable route calculation function of the design support device 2 of the present embodiment, as described above, the optimum cable route of the cable connecting two objects and the length (hereinafter, referred to as a "schematic cable length") thereof are calculated. Then, the information of the calculation result is displayed on the display screen 34a of the display unit 34 of the designer terminal 3.

### (1) First Operation Example of Cable Route Calculation Function

In the first operation example of the cable route calculation function, an operation example in a case where the use of the long object of all the conduits arranged in the virtual space is not limited will be described. In this case, all types of cables can be laid in all conduits arranged in the virtual space. In the first operation example, an example will be described in which two objects (equipment) for which cable routes are to be calculated are both objects of a power panel, and a cable connecting the two objects is an electric cable.

FIG. 10 is a diagram illustrating an example (first operation example) of a calculation mode of the optimum cable route displayed on the display screen 34a of the display unit 34 of the designer terminal 3 when the cable route calculation function is operated on the objects 120 and 121 of the two power panels arranged in the virtual space. FIG. 10 illustrates an example in which three long objects 123, 124, and 125 of conduits that can be used when the two objects 120 and 121 are connected by an electric cable are provided in the virtual space (on the display screen 34a).

In the example illustrated in FIG. 10, the long object 123 (conduit) is a long object linearly extending in a direction from the object 120 (power panel) toward the object 121 (power panel) in the virtual space (on the display screen 34a). Furthermore, the long object 123 is arranged above a region between the two objects 120 and 121 in the virtual space.

The long object 124 (conduit) is a long object linearly extending in a direction orthogonal to the longitudinal direction of the long object 123 (conduit) in the virtual space (on the display screen 34a). Furthermore, the long object 124 is arranged on the object 120 (power panel) side in the upper region of the long object 123 (conduit) in the virtual space.

The long object 125 (conduit) is a long object extending in an L shape in the virtual space (on the display screen 34a), and includes a conduit portion 125a extending linearly in a direction orthogonal to the longitudinal direction of the long object 123 (conduit) and a conduit portion 125b extending linearly in the longitudinal direction of the long object 123. Furthermore, the long object 125 is arranged on the object 121 (power panel) side in the upper region of the long object 123 (conduit) in the virtual space.

After the designer A accesses the virtual space in which the two objects 120 and 121 (power panels) and the three long objects 123, 124, and 125 (conduits) having the above-described configuration are arranged (see the upper diagram of FIG. 10), the designer A operates the execution button of the cable route calculation function using the operation unit 33 in the virtual space displayed on the display screen 34a of the own designer terminal **3.** In this operation, as illustrated in the upper diagram in FIG. 10, an image in which the avatar 40 of the designer A presses (selects) the execution button 126 of the cable route calculation function is displayed in the virtual space (on the display screen 34a). Then, this operation activates the cable route calculation function.

When the cable route calculation function is activated, as illustrated in the lower diagram of FIG. 10, first, a cable route L1 (one-dot chain line in the drawing) for passing the electric cable through the long object 123 (conduit) and a cable route L2 (broken line in the drawing) for passing the electric cable through the long objects 124 and 125 (conduits) are extracted as the cable route between the two objects 120 and 121. At this time, a schematic cable length of each cable route is also calculated. Then, in the example illustrated in FIG. 10, the cable route L1 having the shortest cable route length is selected as the optimal cable route.

At this time, the schematic cable length ("XXm" in FIG. 10) is displayed in the cable route L1 selected as the optimum cable route in the virtual space (on the display screen 34a). On the other hand, for the cable route L2 that has not been selected as the optimal cable route, a cross mark 127 is displayed on the cable route L2 as information indicating that the cable route L2 is not optimal (see the lower diagram of FIG. 10). Note that the display mode of the calculation result of the optimum cable route is not limited to the example illustrated in FIG. 10. For example, in the cable route L1 selected as the optimum cable route, not only the schematic cable length but also information (for example, a circle) indicating that it is optimum may be displayed.

### (2) Second Operation Example of Cable Route Calculation Function

In the second operation example of the cable route calculation function, an operation example in a case where uses of some of the long objects of conduits among the plurality of conduits arranged in the virtual space are limited will be described. Note that the use of the long objects other than the long object of some of the conduits is not limited. In this case, all types of cables can be laid on a conduit of which the use is not limited, but only a type of cable used for the use can be laid on a conduit of which the use is limited (for example, dedicated to communication).

FIG. 11 is a diagram illustrating an example (second operation example) of a calculation mode of the optimum cable route displayed on the display screen 34a of the display unit 34 of the designer terminal 3 when the cable route calculation function is operated on the objects 120 and 121 of the two power panels arranged in the virtual space.

As in the first operation example, in FIG. 11, an example will be described in which two objects (equipment) for which cable routes are to be calculated are both power panels, and a cable connecting the two objects is an electric cable. In addition, the configurations of the two objects 120 and 121 (power panels) and the two long objects 124 and 125 (conduits) illustrated in FIG. 11 are similar to those of the first operation example described in FIG. 10, and the use of the long objects 124 and 125 is not limited. In addition, the use of a long object 123A (conduit) illustrated in FIG. 11 is limited to, for example, only for communication, and an electric cable cannot be laid on the long object 123A. Furthermore, in the example illustrated in FIG. 11, the arrangement positions of the two objects 120 and 121 and the three long objects 123A, 124, and 125 in the virtual space (on the display screen 34a) are similar to the arrangement positions of the two objects 120 and 121 and the three long objects 123, 124, and 125 described in FIG. 10, respectively.

After the designer A accesses the virtual space in which the two objects 120 and 121 (power panels) and the three long objects 123A, 124, and 125 (conduits) having the above-described configuration are arranged, the designer A operates the execution button of the cable route calculation function using the operation unit 33 in the virtual space displayed on the display screen 34a of the own designer terminal 3. In this operation, as the upper diagram in FIG. 10, an image in which the avatar 40 of the designer A presses (selects) the execution button 126 of the cable route calculation function is displayed in the virtual space (on the display screen 34a). Then, this operation activates the cable route calculation function.

When the cable route calculation function is activated, as illustrated in FIG. 11, similarly to the first operation example (see FIG. 10), first, a cable route L1 (one-dot chain line in the drawing) for passing the electric cable through the long object 123A (conduit) and a cable route L2 (broken line in the drawing) for passing the electric cable through the long objects 124 and 125 (conduits) are extracted as the cable route between the two objects 120 and 121. At this time, a schematic cable length of each cable route is also calculated.

Then, in the example illustrated in FIG. 11, since the electric cable cannot be laid on the long object 123A of the conduit, the cable route L2 is selected as the optimum cable route. This determination processing is performed on the basis of the use information included in the attribute information of the long object 123A (conduit).

At this time, the schematic cable length ("YYm" in FIG. 11) is displayed in the cable route L2 selected as the optimum cable route in the virtual space (on the display screen 34a). On the other hand, for the cable route L1 that has not been selected as the optimal cable route, the cross mark 127 is displayed on the cable route L1 as information indicating that the cable route L1 is not optimal (see the lower diagram of FIG. 11).

In a case where the cable route calculation function as in the second operation example is provided, for example, a system designer of upstream design, a device designer, or the like can adjust and/or examine the arrangement position of the equipment (device) with reference to the schematic cable length while keeping in mind the planning and construction situation of the site of downstream design. In other words, by using this function by the designer at each design stage, it is possible to quickly feed back the examination content of the downstream design to the upstream design.

### (Object Arrangement Determination Function)

Next, an example of a determination operation (an example of a determination operation by a designer) of an arrangement position of an object (equipment) in the virtual space executed (controlled) by the object arrangement determination unit 216 (see FIG. 3) will be described. Note that, in the object arrangement determination function of the design support device 2 of the present embodiment, as described above, it is determined whether or not the arrangement position of the predetermined object in the virtual space satisfies the prescribed arrangement condition in the attribute information of the predetermined object.

FIG. 12 is a diagram illustrating an example of an arrangement determination mode displayed on the display screen 34a of the display unit 34 of the designer terminal 3 in a case where a predetermined object (equipment) is arranged at a predetermined position in a predetermined room provided in the virtual space and the object arrangement determination function is activated for the predetermined object.

Note that FIG. 12 illustrates an example of a case where an object 132 of equipment such as a rack that generates radiation is arranged in a predetermined room 130 in which a predetermined object 131 (equipment) such as a device including a semiconductor product having a low radiation tolerance is arranged (see the upper diagram of FIG. 12). Furthermore, here, it is assumed that the radiation dose in the predetermined room 130 is uniform (constant) by the radiation generated by the object 132. Then, in FIG. 12, an example in which the radiation dose in the predetermined room 130 does not satisfy the radiation condition (radiation tolerance) included in the attribute information of the predetermined object 131 (equipment) will be described.

In the example illustrated in FIG. 12, at the time of determining arrangement of objects, first, after the designer A accesses the virtual space, the designer A operates the operation unit 33 in the virtual space displayed on the display screen 34a of the designer terminal 3 of the designer A to select a predetermined object 131 (equipment) to be subject to an arrangement determination. In this operation, as illustrated in the upper diagram of FIG. 12, an image in which the avatar 40 of the designer A selects the object 131 of the predetermined equipment using the selection tool 133 is displayed in the virtual space (on the display screen 34a).

Next, the designer A uses the operation unit 33 to operate (press) an execution button 134 of the object arrangement determination tool in the virtual space (on the display screen 34a) (see the lower diagram of FIG. 12). With this operation, it is determined whether or not the predetermined object 131 can be arranged on the basis of the radiation dose (radiation dose generated by the object 132) in the predetermined room 130 and the attribute information (radiation condition) of the predetermined object 131 (equipment). Then, in the example illustrated in FIG. 12, it is determined that the arrangement of the predetermined object 131 is not allowed, and attention information 135 including a cross mark is displayed in an overlapping manner on the image of the predetermined object 131 as information indicating the determination result. Note that, as in the example illustrated in FIG. 12, in a case where it is determined that arrangement of the predetermined object 131 is not allowed, the designer A or another designer performs an operation such as moving the predetermined object 131 to another room, for example.

In a case where the above-described object arrangement determination function is provided, when an object (equipment) is arranged in the virtual space, it is possible to perform design in consideration of not only conditions such as a condition of an empty space at an arrangement position, a distance condition from other equipment, a temperature condition, and a humidity condition, but also a radiation dose generated from other equipment.

### (Object Movement Determination Function)

Next, an example of a movement determination operation (an example of a determination operation by a designer) of an object (equipment) in the virtual space executed (controlled) by the object movement determination unit 217 (see FIG. 3) will be described. Note that, in the object movement determination function included in the design support device 2 of the present embodiment, as described above, in a case where a predetermined object created at a predetermined position in the virtual space is moved along the movement route, it is determined whether or not the movement of the predetermined object is possible.

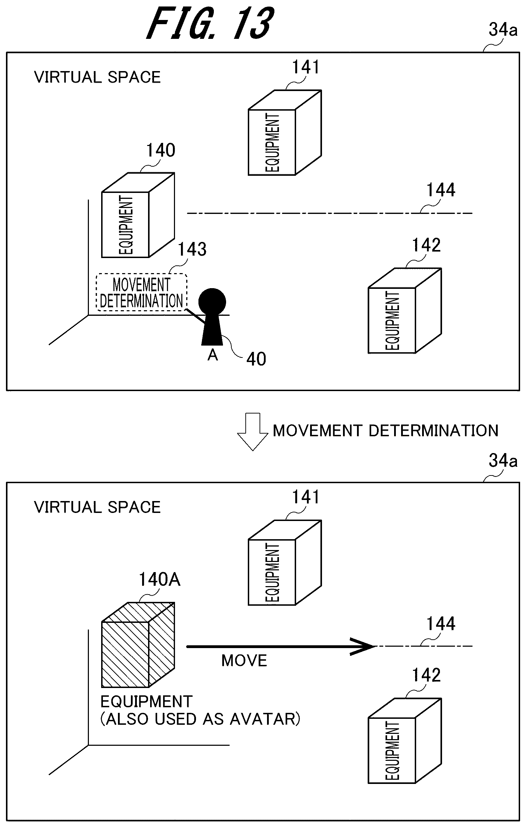

FIG. 13 is a diagram illustrating an example of a movement determination mode displayed on the display screen 34a of the display unit 34 of the designer terminal 3 when the object movement determination function is activated for a predetermined object (equipment) such as a board or a device arranged at a predetermined position in the virtual space.

Note that, in the example illustrated in FIG. 13, a movement determination operation example in a case where the object 140 (equipment) subject to movement determination, which is arranged in the virtual space, is moved along the movement route 144 (one-dot chain line) will be described. Furthermore, here, an example in which the objects 141 and 142 of other equipment (interference objects) are arranged around the movement route 144 of the object 140 will be described. Furthermore, here, an example will be described in which the object 140 of the equipment subject to the movement determination is operated as an avatar of the designer, in other words, an example in which the object 140 is operated as the avatar object 140A at the time of the movement determination operation of the object.

In the example illustrated in FIG. 13, at the time of determining movement of objects, although not illustrated, first, after the designer A accesses the virtual space, the designer A operates the operation unit 33 in the virtual space displayed on the display screen 34a of the own designer terminal 3 to select the object 140 (equipment) subject to the movement determination.

Next, the designer A uses the operation unit 33 to operate an execution button 143 of the movement determination tool in the virtual space (on the display screen 34a) (see the upper diagram of FIG. 13). With this operation, the operation of the movement determination function of the object 140 (equipment) is started. In this operation, as illustrated in the upper diagram in FIG. 13, an image in which the avatar 40 of the designer A operates (presses) the execution button 143 of the movement determination tool is displayed in the virtual space (on the display screen 34a).

Then, once the designer A operates the execution button 143 of the movement determination tool, the object 140 (equipment) subject to the movement determination is changed to the avatar object 140A. As a result, as illustrated in the lower diagram of FIG. 13, the object 140 is displayed as the avatar object 140A in the virtual space (on the display screen 34a). Note that, at this time, by changing the color, shape, or the like of the object 140, it may be notified that the object 140 has been changed to the avatar object 140A. Furthermore, at this time, the image of the avatar 40 of the designer A is deleted in the virtual space (on the display screen 34a).

Next, the designer A uses the operation unit 33 to move the avatar object 140A on the movement route 144 in the virtual space (on the display screen 34a) (see the thick arrow in the lower diagram of FIG. 13). At this time, for example, the designer can manually move an image of the avatar object 140A in a virtual space by operating the operation unit 33 (for example, a key, a button, a mouse, a touch panel, a controller, or the like) of the designer terminal 3. Specifically, the designer A can move the image of the avatar object 140A by directly dragging the image of the avatar object 140A in the virtual space (on the display screen 34a).

Then, by this moving operation, an image in which the avatar object 140A, that is, the designer A moves on the movement route 144 is displayed in the virtual space (on the display screen 34a). Note that, although not illustrated, in a case where a determination result indicating that the movement is not possible is obtained on the basis of the arrangement information (attribute information) of other objects 141 and 142 (interference objects) in the middle of the movement of the avatar object 140A on the movement route 144, an image indicating that the movement is not possible (for example, a cross mark or the like) is displayed on the display screen 34a at that time.

Note that, in the example illustrated in FIG. 13, for convenience of description, an example will be described in which an image of a virtual space viewed from a viewpoint position of a third party from which various objects arranged in the virtual space and the avatar object 140A can be viewed is displayed on the display screen 34a of the designer terminal 3, but the present invention is not limited thereto. For example, an image (video) of the virtual space viewed from the viewpoint position of the avatar object 140A, that is, an image of the virtual space viewed in the line-of-sight direction of the avatar object 140A may be displayed on the display screen 34a of the designer terminal 3. In this case, the designer A can recognize the movement of the avatar object 140A described above and whether or not to allow the movement with a more realistic sense.

### (Retrieval Function of Object-Related Information)

Next, an example of retrieval operation (example of retrieving operation by a designer) of the object-related information of objects (equipment) arranged in the virtual space executed (controlled) by the information retrieval unit 218 (see FIG. 3) will be described. Note that, in the retrieval function of the object-related information included in the design support device 2 of the present embodiment, as described above, the retrieving processing for the object-related information is executed on the basis of, for example, the information such as the name included in the attribute information of the object selected by the operation of the designer.

FIG. 14 is a diagram illustrating a procedure of an operation in a case where an information retrieval is performed by operating the retrieval function of the object-related information for a predetermined object (equipment) arranged at a predetermined position in the virtual space. In the example illustrated in FIG. 14, a case where the object subject to the information retrieval is, for example, a long object 150 such as a pipe or a conduit, and an object 151 of equipment such as a board or a device will be described.

In the example illustrated in FIG. 14, at the time of retrieving the object-related information, although not illustrated, first, after the designer accesses the virtual space, the designer operates the operation unit 33 in the virtual space displayed on the display screen 34a of the designer's own designer terminal 3 to select the long object 150 and the object 151 subject to the information retrieval. In this operation, although not illustrated, an image in which the avatar of the designer selects the long object 150 and the object 151 using the selection tool is displayed in the virtual space (on the display screen 34a).

Next, the designer extracts information (name and the like) used for retrieval from each attribute information associated with the long object 150 and the object 151. Then, the designer inputs the extracted information (retrieval information) into an input form or the like of the retrieval information displayed on the display screen 34a, and operates a retrieval system including, for example, the generative AI or the like to perform information retrieval.

Specifically, in the case of using the generative AI, first, the designer operates (presses) an execution button 152 for the information retrieval (see FIG. 14) displayed in the virtual space (on the display screen 34a). With this operation, although not illustrated, an input form for interactively inputting the retrieval information is displayed in the virtual space (on the display screen 34a).

Next, when the designer inputs the retrieval information (name or the like) extracted from each object to the input form and activates the generative AI, the retrieval for the object-related information storage unit 225 is started as illustrated in FIG. 14, and the object-related information of the long object 150 and the object 151 is collected from the information stored in the object-related information storage unit 225. Then, the collected object-related information is displayed on the display screen 34a. Note that, in a case where the generative AI is used as a retrieval technique for the object-related information, retrieval can be performed in an interactive manner with the designer, and thus, the object-related information desired by the designer can be appropriately retrieved and collected.

In a case where the above-described retrieval function for object-related information is provided, for example, when another designer who is not directly involved in design with respect to a predetermined object (equipment) desires to examine information of the object in a virtual space (on the display screen 34a), the information can be quickly extracted. In this case, even in a situation where only the system designer on the upstream design side can grasp the content of the entire design, it is possible to quickly access necessary information from enormous information on the entire design in a department on the downstream design side such as construction design that does not grasp the content of the entire design. Conversely, for example, the specification of the foundation of the plant building or the like, the specification of the penetrating portion in the building, the building structure, the information of the interference object, and the like set in the downstream design can be known by the system designer on the upstream design side, and the feedback of the information to the system design becomes easy.

### [Operation Example of Concurrent Design Support Work Using Design Support System]

As described above, in the design support system 1 of the present embodiment, in the three-dimensional virtual space simulating the internal and external configurations of the power plant created by the design support device 2, all designers engaged in the plant design work can gather and perform design work in a concurrent manner. At this time, all designers can simultaneously access the virtual space and execute design work together in the virtual space.

Specifically, in the virtual space, each designer can create an object (equipment) individually, or change (update) the configuration (attribute information) of the object created by other designers as well as oneself while discussing with other designers. Here, an operation example of concurrent design support work performed by a plurality of designers in a virtual space created by the design support device 2 will be described with reference to the drawings.

Note that the design support system 1 and the design support device 2 according to the present embodiment perform, for example, design support for ensuring that the contents of designs, such as system design, equipment design, construction design, and site construction plan, created by each department are reasonable in designing a power plant. Then, in the virtual space, the designer of each department performs detailed design of the stage for which the designer is responsible based on the content (design outline) of the entire design (plan) of the power plant resolved through the discussion of the plurality of designers.

### (Example of Object Configuration Change Operation)

FIG. 15 is a diagram illustrating an operation example when another designer changes the configuration of an object (equipment) created by a predetermined designer in a virtual space created by the design support device 2. Note that, in the example illustrated in FIG. 15, an operation example in a case where another designer (hereinafter referred to as "designer B") changes the configuration of the long object 103 created in the virtual space (on the display screen 34a) by the operation of the designer A described in FIG. 5 will be described. Such an operation is performed, for example, in a case where it is necessary to change the configuration of the long object 103 created by the designer A according to design contents at another design stage.

In the example illustrated in FIG. 15, first, after the designer B accesses the virtual space, the designer B operates the operation unit 33 in the virtual space displayed on the display screen 34a of the own designer terminal 3, selects the long object 103 created by the designer A, and displays the attribute information of the long object 103. In this operation, as illustrated in the upper diagram in FIG. 15, in the virtual space (on the display screen 34a), the image in which an avatar 41 of the designer B selects the long object 103 using a selection tool 160 is displayed, and attribute information 161 of the selected long object 103 is also displayed.

Then, the designer B operates the operation unit 33 of the own designer terminal 3 to change the information on the length and diameter of the long object 103 included in the attribute information 161 of the long object 103. With this operation, as illustrated in the lower diagram of FIG. 15, the image of the long object 103 before the change is changed to the image of a long object 103a having the changed length and diameter.

Note that the method of changing the configuration (shape) of the long object 103 is not limited to this example. For example, the designer B may change the length of the long object 103 by operating the operation unit 33 of the designer B's own designer terminal to directly extend or contract the image of the long object 103 in the extending direction in the virtual space (on the display screen 34a). Furthermore, the designer B may change the diameter of the long object 103 by operating the operation unit 33 of the designer B's own designer terminal to directly extend or contract the image of the long object 103 in the direction orthogonal to the extending direction in the virtual space (on the display screen 34a).

### (Example of Retrieval Operation for Object-Related Information)

FIG. 16 is a diagram illustrating an operation example when another designer retrieves the related information of an object (equipment) created by a predetermined designer in a virtual space created by the design support device 2. Note that, in the example illustrated in FIG. 16, an operation example in a case where another designer (designer B) retrieves (collects) the related information of the long object 103 created in the virtual space (on the display screen 34a) by the operation of the designer A described in FIG. 5 will be described. Such an operation is performed, for example, for the designer B to grasp the specific configuration of the long object 103 created by the designer A.

In the example illustrated in FIG. 16, first, after the designer B accesses the virtual space, the designer B operates the operation unit 33 in the virtual space displayed on the display screen 34a of the own designer terminal 3, selects the long object 103 created by the designer A, and displays the attribute information of the long object 103. In this operation, as illustrated in the upper diagram in FIG. 16, in the virtual space (on the display screen 34a), the image in which the avatar 41 of the designer B selects the long object 103 using a selection tool 160 is displayed, and the attribute information 161 of the selected long object 103 is also displayed.

Then, the designer B extracts, for example, retrieval information such as a name from the attribute information 161 of the long object 103. Next, the designer B uses the operation unit 33 of the designer's own designer terminal 3 to operate an execution button 162 for the information retrieval displayed in the virtual space (on the display screen 34a). In this operation, as illustrated in the middle diagram in FIG. 16, an image in which the avatar 41 of the designer B presses the execution button 162 for information retrieval is displayed in the virtual space (on the display screen 34a). In addition, with this operation, an input form 163 for inputting the retrieval information is displayed in the virtual space (on the display screen 34a). Note that, at this time, in the virtual space (on the display screen 34a), the image of the attribute information 161 of the long object 103 is erased.

Then, using the operation unit 33 of the own designer terminal 3, the designer B inputs retrieval information such as a name extracted from the attribute information 161 of the long object 103 into the input form 163 of the retrieval information displayed in the virtual space (on the display screen 34a), and activates an information retrieval system (not illustrated) including, for example, generative AI or the like to perform information retrieval. With this operation, related information 164 of the long object 103 is retrieved and acquired, and the acquired related information 164 of the long object 103 is displayed in the virtual space (on the display screen 34a) (see the lower diagram of FIG. 16). In addition, at this time, in the virtual space (on the display screen 34a), the image of the input form 163 is erased.

Note that, in the example illustrated in FIG. 16, in the related information 164 of the long object 103 displayed in the virtual space (on the display screen 34a), each piece of information is displayed in a list form. Then, the designer B operates the operation unit 33 to select predetermined information in the related information 164 in the virtual space (on the display screen 34a), whereby the related information corresponding to the selected predetermined information is displayed. For example, when the designer B selects the "appearance image" in the related information 164 in the virtual space (on the display screen 34a), the appearance image of the long object 103 is displayed on the display screen 34a. However, the display mode of the related information is not limited to this example, and the related information itself may be directly displayed in the virtual space (on the display screen 34a) instead of the list (item) of the related information.

### (Operation Example at time of Using Object Arrangement Determination Function)

FIG. 17 is a diagram illustrating an operation example when another designer performs object arrangement determination of an object (equipment) created by a predetermined designer in a virtual space created by the design support device 2.

Note that, in FIG. 17, for example, an example of a case where objects 170 and 171 of two power panels and an object 172 of other equipment (interference objects) are created in advance by the designer A in the virtual space (on the display screen 34a) will be described. Furthermore, an example in which two objects 170 and 171 (power panels) are arranged apart from each other by a predetermined distance in the virtual space (on the display screen 34a), and the object 172 (interference object) is arranged above the object 171 (power panel) will be described.

In addition, in FIG. 17, an example in which two long objects 173 and 174 (conduits) are created in advance in an upper portion of a region between two objects 170 and 171 (power panels) by the designer A in the virtual space (on the display screen 34a) will be described. At this time, it is assumed that one long object 173 is arranged on one object 170 side, and the other long object 174 is arranged on the other power panel on the object 171 side and in the vicinity of the object 172 (interference object).

In the example illustrated in FIG. 17, although not illustrated, first, after the designer B accesses the virtual space, the designer B operates the operation unit 33 in the virtual space displayed on the display screen 34a of the own designer terminal 3, selects the long objects 173 and 174 created by the designer A. In this operation, although not illustrated, an image in which the avatar 41 of the designer B selects the long objects 173 and 174 using the selection tool is displayed in the virtual space (on the display screen 34a).

Next, the designer B uses the operation unit 33 of the designer's own designer terminal 3 to operate an execution button 175 for the arrangement determination function in the virtual space (on the display screen 34a). In this operation, as illustrated in the upper diagram in FIG. 17, an image in which the avatar 41 of the designer B operates (presses) the execution button 175 for the arrangement determination function is displayed in the virtual space (on the display screen 34a). Then, with this operation, it is determined whether or not to allow the arrangement of each of the two long objects 173 and 174 on the basis of the installation position and the arrangement condition included in each piece of attribute information of the two long objects 173 and 174 of the conduits and the installation position and the arrangement condition included in each piece of attribute information of the two objects 170 and 171 (power panels) and the object 172 (interference object) arranged around the two long objects.

In the example illustrated in FIG. 17, it is assumed that the arrangement condition of the long object 174 is not satisfied because the distance between the installed object 172 (interference object) and the long object 174 (conduit) is narrow and there is no margin in the arrangement interval. Therefore, according to the execution of the above-described arrangement determination function by the designer B, it is determined that the arrangement of the long object 174 (conduit) is impossible, and the attention information 176 including the cross mark is displayed in an overlapping manner on the image of the predetermined long object 174 (see the upper diagram of FIG. 17).

Then, using the operation unit 33 of own designer terminal 3, the designer B moves the long object 174 (conduit) determined not to be arranged to a position away from the object 172 (interference object) in the virtual space (on the display screen 34a). In this operation, as illustrated in the lower diagram of FIG. 17, an image in which the avatar 41 of the designer B moves the long object 174 (conduit) in a direction away from the object 172 (interference object) is displayed in the virtual space (on the display screen 34a).

Note that the movement of the long object 174 (conduit) in the virtual space (on the display screen 34a) can be realized, for example, by the designer B changing the information of the arrangement position included in the attribute information of the long object 174. Furthermore, for example, the designer B may operate the operation unit 33 of own designer terminal 3 in the virtual space (on the display screen 34a) to directly drag the image of the long object 174 (conduit) and move the long object 174.

Furthermore, in the example illustrated in FIG. 17, an example in which the designer B moves the long object 174 to a position away from the object 172 (interference object) in order to satisfy the arrangement condition of the long object 174 (conduit) has been described, but the present invention is not limited thereto. For example, in order to satisfy the arrangement condition of the long object 174, the designer B may move the object 172 to a position away from the long object 174.

### [Effects]

As described above, in the design support system 1 of the present embodiment, in the three-dimensional virtual space simulating the internal and external configurations of the power plant created by the design support device 2, all designers involved in the plant design work can gather and perform design work in a concurrent manner. At this time, all designers can simultaneously access the virtual space and perform design work together in the virtual space. In addition, attribute information of an object created in the virtual space by a predetermined designer can be referred to by other designers. Furthermore, the configuration (size and arrangement position) of the object created in the virtual space by a predetermined designer can be edited by other designers as necessary.

Therefore, in the design support system 1 and the design support device 2 of the present embodiment, for example, communication is achieved among all designers engaged in each design from upstream design to downstream design proceeding in a waterfall manner like a design work of a power plant or the like, and information on design contents can also be shared. As a result, in the present embodiment, rational design can be obtained among a plurality of designs in a case where the design of the entire plan is configured by the plurality of designs, such as a design operation of a power plant or the like.

### [Various Modifications]

Although the design support system 1 and the design support device 2 according to an embodiment of the present invention have been described above, the present invention is not limited thereto, and various other modifications can be made without departing from the gist of the present invention described in the claims. For example, the following various modifications can be adopted, and the same effects as those of the above embodiment can be obtained in the following various modifications.

In the above embodiment, in order to explain operation contents of various functions included in the design support system 1 and the design support device 2, an example has been described in which an image of a virtual space viewed from a viewpoint position of a third party from which various objects of each equipment arranged in the virtual space and the avatar can be viewed is displayed on the display screen 34a of the designer terminal 3, but the present invention is not limited thereto. For example, an image (video) of the virtual space viewed from the viewpoint position of the avatar of the designer may be displayed on the display screen 34a of the designer terminal 3. In this case, the designer can perform design work with a realistic feeling in the virtual space (on the display screen 34a).

The design support device 2 of the above embodiment may have a function of enabling a plurality of designers accessing the virtual space to communicate with each other by voice, chat, or the like. In this case, among a plurality of designers, each designer can easily understand ideas, intentions, and the like of other designers, and a more rational design can be realized.

In the above embodiment, an example in which the control unit 21 included in the design support device 2 is configured by a single device has been described, but the present invention is not limited thereto. For example, the control unit 21 may include a plurality of devices communicably connected to each other.

In the above embodiment, an example in which the operation of various functions of the design support device 2 is executed on software has been described, but the present invention is not limited thereto. For example, some or all of the various functions of the design support device 2 may be realized by hardware such as a circuit.

In the above embodiment, the design support system 1 and the design support device 2 that can be used in the design work of the power plant have been described, but the present invention is not limited thereto. The technology of the present invention described above can be applied to design work in any technical field as long as it is a technical field in which a plurality of design work can proceed in a waterfall manner.

In addition, in the above embodiment, the configuration of the device has been described in detail and specifically for the sake of easy understanding of the present invention, and the present invention is not necessarily limited to one including all the described configurations. For the sake of easy understanding of the invention, positions, sizes, shapes, ranges, and the like of the components illustrated in the drawings and the like may not represent actual positions, sizes, shapes, ranges, and the like. Therefore, the present invention is not necessarily limited to the positions, sizes, shapes, ranges, and the like disclosed in the drawings and the like. In addition, it is possible to delete a part of the configuration of the above embodiment, and add and replace with other configurations. In addition, the illustrated control lines and information lines indicate what is considered to be necessary for the description, and do not necessarily indicate all the control wires and information wires on the product. In practice, it may be considered that almost all the configurations are connected to each other.

## Claims

1. A design support device comprising:
a virtual space creation unit configured to create image data of a three-dimensional virtual space simulating a site to be designed;
a communication unit communicably connected to a plurality of external devices used by a plurality of users, configured to transmit the image data of the virtual space created by the virtual space creation unit to the plurality of external devices and receive information of a predetermined operation related to a design performed on the virtual space by each of the plurality of users in the user's own external device; and
an object control unit having a function of creating an object simulating equipment to be designed in the virtual space, in a case where information on a creation operation of a predetermined object performed by a predetermined user included in the plurality of users in the virtual space is input via the communication unit, configured to create image data of the predetermined object and create attribute information of the predetermined object that can be referred to by other users to output the image data and the attribute information of the predetermined object to the plurality of external devices via the communication unit.

2. The design support device according to claim 1, wherein
the object control unit is configured to:
include a function in which the predetermined user changes a configuration of a specific object created by the other users in the virtual space; and
in a case where information of a change operation of the predetermined user for the specific object is input via the communication unit, change image data of the specific object and attribute information thereof so as to reflect the change operation, and output the changed image data and attribute information of the specific object to the plurality of external devices via the communication unit.

3. The design support device according to claim 1, wherein
the object control unit is configured to:
include a function of combining a plurality of objects arranged in the virtual space; and
in a case where information of a combining operation performed on the plurality of objects in the virtual space by the predetermined user is input via the communication unit, create image data and attribute information of an object obtained by combining the plurality of objects, and output the image data and attribute information of the combined object to the plurality of external devices via the communication unit.

4. The design support device according to claim 3, wherein
the attribute information includes first information that does not need to be changed by combining the plurality of objects and second information that needs to be changed by combining the plurality of objects, and
when combining the plurality of objects, the object control unit sets attribute information of one object among the plurality of objects as attribute information of the combined object, and changes the second information included in the attribute information of the combined object to information corresponding to a combined content.

5. The design support device according to claim 4, wherein
the function of combining the plurality of objects arranged in the virtual space includes a function of combining the plurality of objects arranged apart from each other in the virtual space, and
the object control unit is configured to:
in a case where information of a combining operation of the predetermined user for the plurality of objects arranged apart from each other in the virtual space is input via the communication unit, create a complementary object connecting the plurality of objects arranged apart from each other to combine the plurality of objects via the complementary object and create image data and attribute information of the combined object to output the image data and attribute information of the combined object to the plurality of external devices via the communication unit.

6. The design support device according to claim 1, wherein
the object control unit includes a function of extracting an optimum cable route when two objects arranged in the virtual space are connected by a cable via one or more long objects arranged in the virtual space and on which the cable can be laid,
each piece of attribute information of the two objects includes arrangement position information of the object in the virtual space,
the attribute information of the long object includes arrangement position information and application limiting information of the long object in the virtual space, and
in a case where information of an extraction operation of an optimum cable route between the two objects performed by the predetermined user in the virtual space is input via the communication unit, the object control unit extracts the optimum cable route and calculates a length of the optimum cable route based on the arrangement position information of each of the two objects and the arrangement position information and the application limiting information of each of the one or more cable objects, and outputs information of the length of the optimum cable route to the plurality of external devices via the communication unit.

7. The design support device according to claim 1, wherein
the attribute information of the object includes an arrangement condition for resolving whether or not to allow arrangement of the object in the virtual space, and
the object control unit is configured to:
include a function of determining whether or not to allow arrangement of objects arranged in the virtual space; and
in a case where information of a determination operation on whether or not to allow arrangement performed by the predetermined user on an object arranged at a predetermined position in the virtual space is input via the communication unit, determine, based on an arrangement condition of an object to be determined, whether or not to allow arrangement of the object at the predetermined position, create image data indicating a result of the determination, and output the image data indicating the result of the determination to the plurality of external devices via the communication unit.

8. The design support device according to claim 7, wherein
the arrangement condition for resolving whether or not to allow arrangement of the object in the virtual space includes information on radiation tolerance.

9. The design support device according to claim 1, wherein
the object control unit is configured to:
include a retrieval function for related information of the object arranged in the virtual space; and
in a case where information of a retrieval operation for related information of the object performed by the predetermined user on the object arranged in the virtual space is input via the communication unit, retrieve the object based on attribute information of the object, and output information regarding a result of the retrieval to the plurality of external devices via the communication unit.

10. The design support device according to claim 9, wherein
the object control unit retrieves related information of the object using generative artificial intelligence.

11. A design support system comprising:
a plurality of information processing devices used by each of a plurality of users;
a virtual space creation unit configured to create image data of a three-dimensional virtual space simulating a site to be designed;
a communication unit communicably connected to the plurality of information processing devices, configured to transmit the image data of the virtual space created by the virtual space creation unit to the plurality of information processing devices and receive information of a predetermined operation related to a design performed on the virtual space by each of the plurality of users in the user's own information processing device; and
an object control unit having a function of creating an object simulating equipment to be designed in the virtual space, in a case where information on a creation operation of a predetermined object performed by a predetermined user included in the plurality of users in the virtual space is input via the communication unit, configured to create image data of the predetermined object and create attribute information of the predetermined object that can be referred to by other users to output the image data and the attribute information of the predetermined object to the plurality of information processing devices via the communication unit.
